# EUROPEAN PATENT APPLICATION

(11) **EP 4 737 158 A1**
(43) Date of publication of application: **06.05.2026**
(21) Application number: 24829935.6
(22) Date of filing: 05.03.2024
(51) Int. Cl.: B60K 1/04, B60S 5/06, B60L 53/80

(54) **BATTERY MOUNTING RACK, FRAME ASSEMBLY AND VEHICLE**

(30) Priority: 30.06.2023 CN 202310799492
(71) Applicant: Contemporary Amperex Technology Co., Limited, Ningde, Fujian 352100 (CN)
(72) Inventor: WU, Kai, Ningde, Fujian 352100 (CN); CAO, Gen, Ningde, Fujian 352100 (CN); WANG, Chunhui, Ningde, Fujian 352100 (CN); CHAN, Libing, Ningde, Fujian 352100 (CN); LIN, Baiqing, Ningde, Fujian 352100 (CN)
(74) Representative: Ran, Handong
(86) International application number: PCT/CN2024/080147
(87) International publication number: WO 2025/001282

(57) **Abstract**

A battery mounting rack (10), comprising: a first rack (2A), which comprises a plurality of extension parts (2) spaced apart in a first direction (X) and a plurality of battery mounting spaces (4) arranged in sequence in the first direction (X), wherein each battery mounting space (4) is defined between two extension parts (2) adjacent to each other in the first direction (X), and the battery mounting rack (10) is provided with a battery mounting structure (3) configured to mount a battery (30) in each battery mounting space (4). Further disclosed are a frame assembly and a vehicle.

## Description

### CROSS-REFERENCE TO RELATED APPLICATIONS

This application is based on and claims the priority to Chinese Patent Application No. 202310799492.4, filed on June 30, 2023, which is incorporated herein by reference in its entirety.

### TECHNICAL FIELD

This application relates to the field of batteries, and specifically to a battery installation frame, a frame assembly, and a vehicle.

### BACKGROUND

Energy conservation and emission reduction are key to the sustainable development of the automotive industry. Electric vehicles, due to their energy-saving and environmentally friendly advantages, have become an important part of the sustainable development of the automotive industry. For electric vehicles, battery technology stands as a pivotal factor influencing their development. However, when battery packs of vehicles are replaced at swapping stations, the energy in the battery packs is often not fully depleted, resulting in energy waste.

### SUMMARY

In view of the above issues, this application provides a battery installation frame, a frame assembly, and a vehicle, where the battery installation frame is capable of mounting a plurality of batteries, allowing for selective replacement of batteries based on actual needs, thereby alleviating the problem of energy waste.

According to a first aspect, this application provides a battery installation frame, where the battery installation frame includes a first frame, the first frame includes a plurality of extension portions spaced apart along a first direction and a plurality of battery mounting spaces arranged sequentially along the first direction, the battery mounting space is defined between two adjacent extension portions along the first direction, and the battery installation frame is provided with a battery mounting structure configured to mount a battery in the battery mounting space.

In the technical solution of the embodiments of this application, when such a battery installation frame is configured to install batteries in a vehicle, since the battery installation frame includes a plurality of battery mounting spaces and the battery installation frame is provided with a battery mounting structure, each battery mounting space can be used for mounting a battery, and thus batteries can be individually mounted in each battery mounting space. This allows the battery installation frame to have the function of installing a plurality of batteries. During battery swapping, only batteries that have depleted their energy can be replaced while retaining batteries with remaining energy, thereby improving the energy utilization of the batteries and alleviating the problem of energy waste. Moreover, when the battery installation frame is used in a vehicle, the first direction can be set as the length direction of the vehicle, enabling the battery installation frame to have the function of mounting a plurality of batteries along the length direction of the vehicle. This helps to increase the quantity of batteries that can be arranged on the vehicle and helps to enlarge the dimension of the battery mounting space in the length and width directions of the vehicle to increase the volumetric energy density of the batteries. Additionally, since the battery mounting space is defined between two adjacent extension portions along the first direction, the extension portions can be used to protect the batteries, alleviating problems such as collisions and heat transfer between batteries in two adjacent battery mounting spaces along the first direction.

In some embodiments, at least two of the battery mounting spaces on the first frame have consistent lengths in the first direction.

In the above technical solution, since at least two of the battery mounting spaces on the first frame have consistent lengths in the first direction, batteries of the same specification can be installed in the at least two battery mounting spaces with consistent lengths in the first direction, allowing a battery to be installed in any one of these battery mounting spaces, thereby improving the installation efficiency and installation flexibility.

In some embodiments, at least two of the battery mounting spaces on the first frame have inconsistent lengths in the first direction.

In the above technical solution, since at least two of the battery mounting spaces on the first frame have inconsistent lengths in the first direction, when batteries of different specifications are installed in the at least two battery mounting spaces with inconsistent lengths in the first direction, batteries of different specifications can be installed in battery mounting spaces of corresponding dimensions. This enables the configurations of the battery mounting spaces to match the specifications of the corresponding batteries, thereby reducing installation space waste and allowing the battery installation frame to accommodate at least two types of batteries with different specifications.

In some embodiments, the battery installation frame includes two of the first frames spaced apart along a second direction, each of the first frame includes a plurality of battery mounting spaces arranged sequentially along the first direction, and the second direction intersects the first direction.

In the above technical solution, by configuring the battery installation frame to include two of the first frames, each including a plurality of battery mounting spaces arranged sequentially along the first direction, each first frame is capable of mounting a plurality of batteries in the first direction. Moreover, the two first frames are spaced apart along the second direction, which can fully utilize the space in the second direction to increase the quantity of batteries that the battery installation frame can mount, facilitating an increase in the driving range of the vehicle per battery swap.

In some embodiments, the extension portions of the two first frames are arranged in a one-to-one correspondence along the second direction, length extension directions of the two correspondingly arranged extension portions are the same, and orthographic projections of the two extension portions along the length extension direction overlap.

In the above technical solution, with the above configuration, the battery mounting spaces defined by the two first frames and corresponding to each other in the second direction have the same dimension and aligned positions. Therefore, when the battery installation frame is used to install a large dimensional and regularly shaped battery, two side portions of the battery can respectively fit with the two correspondingly arranged battery mounting spaces in the second direction. This allows the two correspondingly arranged battery mounting spaces in the second direction to be used together to install a large dimensional battery, facilitating an increase in the energy density of the installed battery. Moreover, when the extension portions are provided with the battery mounting structure, the two extension portions corresponding in positions along the second direction can respectively support the two side portions of the large dimensional battery, so as to enhance the stress balance and mounting stability of the battery.

In some embodiments, the first direction is perpendicular to the second direction, the length extension direction of the extension portions is the second direction, and the battery mounting spaces on the two first frames are symmetrically arranged.

In the above technical solution, two end portions of a symmetrically shaped and large dimensional battery can be mounted in the symmetrically arranged battery mounting spaces, meeting the mounting requirements of large dimensional batteries. Moreover, the batteries or local portions of a battery installed in the symmetrical battery mounting spaces are more evenly distributed, and the force applied to the battery installation frame can be relatively balanced, which helps to enhance the structural stability of the battery installation frame.

In some embodiments, the battery installation frame further includes a second frame, the second frame connects the two first frames spaced apart along the second direction, the second frame includes a beam avoidance groove, and the beam avoidance groove has an opening running through along the first direction.

In the above technical solution, by providing the second frame, the two first frames can be connected into an integral structure through the second frame, such that, for example, fixing the second frame to the vehicle frame can achieve the fixation of the battery installation frame, allowing each first frame to reach its operational position, thereby reducing the assembly difficulty of the battery installation frame. Meanwhile, the beam avoidance groove of the second frame has an opening running through along the first direction, allowing a portion of the vehicle beam to extend into the beam avoidance groove, enabling the beam avoidance groove to avoid the vehicle beam, preventing interference between the battery installation frame and the vehicle beam, and improving the compactness of the fit between the battery installation frame and the vehicle beam. This facilitates the use of space near the vehicle beam to arrange batteries, thereby facilitating an increase in the dimension and volumetric energy density of the batteries.

In some embodiments, the second frame includes a plurality of first main walls, the plurality of first main walls are spaced apart along the first direction to form a battery avoidance opening between two adjacent first main walls, and the battery avoidance opening is arranged opposite the battery mounting space along the second direction.

In the above technical solution, by providing the battery avoidance opening, when a larger dimensional battery is installed in the battery mounting space, the battery can be accommodated through the battery avoidance opening to prevent interference between the battery and the second frame 1, facilitating the installation of larger dimensional batteries and increasing the energy density of the installed batteries.

In some embodiments, the second frame further includes two second main walls, the second main walls extend along the first direction, the two second main walls are spaced apart and connected along the second direction on two sides of each of the first main walls, such that the beam avoidance groove is defined between the first main wall and the two second main walls, the first frame is arranged on a side of the second main wall away from the first main wall in the second direction, and each of the extension portions is connected to the second main wall.

In the above technical solution, by providing the second main walls, the plurality of first main walls and the second main walls can be connected into an integral structure, facilitating the reduction of the difficulty in configuring the second frame, and contributing to defining the extension direction of the beam avoidance groove such that the beam avoidance groove extends along the first direction. The first frame is arranged on a side of the second main wall away from the first main wall in the second direction, and each of the extension portions is connected to the side of the second main wall away from the first main wall in the second direction, avoiding interference between the extension portions and the vehicle beam, and facilitating the expansion of the battery mounting space in the second direction, thereby helping to increase the dimension and volumetric energy density of the batteries.

In some embodiments, a height of the extension portion slopes downward in a direction away from the second main wall.

In the above technical solution, by configuring the height of the extension portion to tend to decrease in a direction away from the second main wall, the height of a region of the extension portion away from the second main wall is relatively small. To be specific, the height of an end of the extension portion connected to the second main wall is relatively large, while the height of an end of the extension portion away from the second main wall is relatively small. This can enhance the connection strength between the extension portion and the second main wall, improve the mounting reliability of the extension portion for the battery, and reduce the weight of the extension portion, thereby lowering the load of the vehicle.

In some embodiments, a lower edge of the extension portion extends along a horizontal line, the battery mounting structure is located at the lower edge of the extension portion, and an upper edge of the extension portion slopes downward in a direction away from the second main wall.

In the above technical solution, a height of the battery mounting structure is relatively low, facilitating the reduction of difficulty of mounting the battery and ensuring that the battery mounting structures are located at the same horizontal height, thereby simplifying operations of mounting the battery.

In some embodiments, at least one of the first frame and the second frame is provided with a beam connection structure.

In the above technical solution, the beam connection structure may be provided on the first frame, or the beam connection structure may be provided on the second frame, or the beam connection structure may be provided on both the first frame and the second frame. As such, since the second frame cooperates with the vehicle beam through the beam avoidance groove, both the second frame and the first frame can have a portion close to the vehicle beam. In this way, by providing the beam connection structure to connect to the vehicle beam, the battery installation frame can be easily installed onto the vehicle frame.

In some embodiments, at least one of a heat insulation structural member, a heat dissipation structural member, or a buffer structural member is provided on a side of the extension portion facing the battery mounting space.

In the above technical solution, providing a heat insulation structural member can alleviate heat transfer effects between two adjacent batteries; providing a heat dissipation structural member facilitates heat dissipation for the battery, thereby alleviating overheating of the battery; and providing a buffer structural member helps to buffer the battery, reducing rigid contact between the battery and the buffer portion, thereby protecting the battery and helping to prolong the service life of the battery.

In some embodiments, the battery mounting structure is provided on the extension portion.

In the above technical solution, by providing the battery mounting structure on the extension portion, the battery mounting structure occupies only the space in the first direction. This can avoid the battery mounting structure from occupying space in other directions, facilitating an increase in the battery dimension in other directions.

In some embodiments, the battery mounting structure is arranged on a side of the extension portion facing the battery mounting space.

In the above technical solution, the battery mounting structure is arranged on a side of the extension portion facing the battery mounting space. Therefore, the battery mounting structure corresponds to the battery mounting space it faces and is configured to mount the battery in the battery mounting space that the battery mounting structure faces, thereby clearly defining the correspondence between the battery mounting structure and the battery mounting space. When the battery is inserted into the battery mounting space, it can be connected to the battery mounting structure facing the battery mounting space, facilitating the mounting of the battery. Moreover, when there are a plurality of battery mounting spaces, the battery mounting structures corresponding to different battery mounting spaces are positioned differently and do not interfere with each other. This allows the battery mounting structure corresponding to each battery mounting space to have ample space for flexible configuration, enabling the battery mounting structure to more easily and reliably mount the battery.

In some embodiments, at least one extension portion located in the middle among the plurality of extension portions is a shared extension portion, the shared extension portion has the battery mounting spaces on two sides in the first direction, and the battery mounting structures are respectively arranged on two sides of the shared extension portion facing the battery mounting spaces on two sides.

In the above technical solution, when the quantity of battery mounting spaces spaced apart along the first direction is fixed, the quantity of extension portions spaced apart along the first direction can be reduced, facilitating cost reduction and lowering the load of the vehicle.

In some embodiments, the battery mounting structures on two sides of the shared extension portion in the first direction are offset in their orthographic projections on a projection plane perpendicular to the first direction.

In the above technical solution, the battery mounting structures on two sides of the shared extension portion are configured to are offset in their orthographic projections on a projection plane perpendicular to the first direction, which facilitates more reasonable the stress distribution on the shared extension portion. When batteries in the battery mounting spaces on the two sides of the shared extension portion are connected to the battery mounting structures on the two sides of the shared extension portion, respectively, problems such as deformation or fracture of the shared extension portion caused by stress concentration can be alleviated, prolonging the service life of the shared extension portion, and improving the mounting reliability of the battery.

In some embodiments, the extension portion includes a mounting edge protruding into the battery mounting space, and the battery mounting structure is located on the mounting edge.

In the above technical solution, providing the mounting edge helps to reduce the configuration difficulty of the battery mounting structure, making it easy to position the battery mounting structure on a side of the extension portion facing the battery mounting space. Moreover, the mounting edge can provide direct or indirect support to the battery to some extent, enhancing the mounting stability of the battery.

In some embodiments, the extension portions on two sides of the battery mounting space in the first direction are each provided with the battery mounting structure.

In the above technical solution, the extension portions on two sides of the battery mounting space in the first direction can each support the battery in the battery mounting space, and the battery mounting structures on two sides can disperse the stress, alleviating problems such as deformation or fracture of the extension portion caused by stress concentration, prolonging the service life of the extension portion, and enhancing the mounting reliability of the battery.

In some embodiments, the battery mounting structures on two sides of the battery mounting space in the first direction are offset in their orthographic projections on a projection plane perpendicular to the first direction.

In the above technical solution, configuring the battery mounting structures on two sides of the battery mounting space to are offset in their orthographic projections on a projection plane perpendicular to the first direction further facilitates stress dispersion of the battery mounting structures on the two sides, further alleviating problems such as deformation or fracture of the extension portion caused by stress concentration. Additionally, when the battery mounting structures on the two sides of the shared extension portion in the first direction are offset in their orthographic projections on the projection plane perpendicular to the first direction, and the battery mounting structures on the two sides of the battery mounting space in the first direction are offset in their orthographic projections on the projection plane perpendicular to the first direction, the plurality of extension portions can be constructed with identical structures. This helps to simplify the structure, facilitates processing, reduces costs, and is conducive to improving assembly efficiency.

In some embodiments, a plurality of battery mounting structures are provided on a side of the extension portion facing the battery mounting space, and at least two of the battery mounting structures are spaced apart along the length direction of the extension portion.

In the above technical solution, this arrangement facilitates full utilization of the space in the length direction of the extension portion, allowing for the arrangement of a greater quantity of battery mounting structures, thereby enhancing the mounting stability of the battery or helping to increase the quantity of batteries mounted in the battery mounting space.

In some embodiments, the extension portion is plate-shaped, with a thickness direction as the first direction, a length direction as a second direction, and a width direction as a height direction.

In the above technical solution, by configuring the extension portion as plate-shaped and defining the first direction and the second direction as described above, the battery mounting space can be located on one or two sides of the extension portion in the thickness direction of the extension portion, which can fully utilize the length structural characteristics of the extension portion to define the battery mounting space, enabling the extension portion to occupy less space while defining a larger battery mounting space. Additionally, the battery installation frame defines a plurality of battery mounting spaces in the thickness direction of the extension portion, with a distance between two adjacent battery mounting spaces in the thickness direction of the extension portion being the thickness of the extension portion, resulting in a smaller gap between the two adjacent battery mounting spaces. This allows for more battery mounting spaces to be arranged in the thickness direction of the extension portion, further improving space utilization.

In some embodiments, the extension portion is provided with reinforcing ribs and/or a weight-reducing structure.

In the above technical solution, providing reinforcing ribs helps to enhance the structural strength of the extension portion, alleviating problems related to stress-induced deformation of the extension portion and improving the mounting reliability of the extension portion for the battery. Providing a weight-reducing structure helps to reduce the weight of the extension portion, facilitating a lightweight design of the extension portion.

In some embodiments, the first frame further includes a reinforcing portion, the reinforcing portion connecting at least two of the extension portions.

In the above technical solution, this arrangement helps to enhance the overall structural strength of the battery installation frame, alleviate the deformation of the extension portion caused by stress, and improve the mounting reliability of the battery.

According to a second aspect, this application provides a frame assembly including a vehicle frame and the battery installation frame according to any one of the embodiments described above, where the battery installation frame is configured to install a battery to the vehicle frame, and the first direction is a length direction of the vehicle frame.

In the above technical solution, when such a battery installation frame is configured to install batteries in a vehicle, since the battery installation frame includes a plurality of battery mounting spaces arranged sequentially along the length direction of the vehicle frame, the battery installation frame can fully utilize the space in the length direction of the vehicle frame to install a greater quantity of batteries. During battery swapping, only batteries that have depleted their energy can be replaced while retaining batteries with remaining energy, thereby improving the energy utilization of the batteries and alleviating the problem of energy waste.

In some embodiments, the battery installation frame is arranged at the bottom of the vehicle frame, the vehicle frame includes a vehicle beam, the first frame is provided on at least one side of the vehicle beam in a width direction of the vehicle beam, and at least a portion of the first frame is higher than a bottom surface of the vehicle beam of the vehicle frame in a height direction of the vehicle frame.

In the above technical solution, the battery mounting space is not entirely below the vehicle beam but has at least a portion higher than the bottom surface of the vehicle beam and located on at least one side of the vehicle beam in the width direction of the vehicle beam, which can fully utilize the bottom space of the vehicle frame to arrange the extension portions and battery mounting spaces, facilitating the mounting of larger dimensional batteries on the battery installation frame, thereby increasing the driving range of the vehicle per battery swap.

In some embodiments, the first frames are symmetrically arranged on two sides of the vehicle beam in the width direction of the vehicle beam.

In the above technical solution, the first frames are respectively provided on two sides of the vehicle beam in the width direction of the vehicle beam, with the first frames on two sides of the vehicle beam in the width direction of the vehicle beam being symmetrically arranged, which can simplify the structure of the battery installation frame, facilitate processing, and fully utilize the underbody space to mount a greater quantity or larger dimensional batteries.

According to a third aspect, this application provides a vehicle including a battery and the frame assembly according to any one of the embodiments described above, where at least a portion of the battery is accommodated in the battery mounting space.

In the above technical solution, at least a portion of the battery is accommodated in the battery mounting space, enabling the battery to be mounted on the vehicle, increasing the ground clearance of the battery to increase the ground clearance of the vehicle, and facilitating full utilization of the battery mounting space to reduce the installation space occupied by the battery. Moreover, this arrangement helps to increase the quantity of mounted batteries, allowing for selective battery swapping as needed, and reducing energy waste.

In some embodiments, the battery is detachably installed in any one of the battery mounting spaces.

In the above technical solution, the battery can be installed in any one of the battery mounting spaces. This can increase the versatility of the battery mounting spaces, thereby reducing the difficulty of mounting the battery, and improving the flexibility of selecting installation positions for battery swapping.

In some embodiments, the vehicle includes a plurality of the batteries arranged along the first direction, and the plurality of batteries are respectively installed in a one-to-one correspondence in the plurality of battery mounting spaces.

In the above technical solution, the plurality of batteries are respectively installed in a one-to-one correspondence in the plurality of battery mounting spaces, enabling the first frame to achieve the mounting of a plurality of batteries arranged along the first direction, that is, realizing multi-pack mounting, thereby fully utilizing the space in the length direction of the vehicle to increase the quantity of batteries and increase the driving range of the vehicle per battery swap.

In some embodiments, the battery includes a battery upper portion and a battery lower portion, the battery upper portion is accommodated in the battery mounting space, the battery is provided with an installation structure at a position between the battery upper portion and the battery lower portion, and the installation structure is detachably connected to the battery mounting structure.

In the above technical solution, when the battery is mounted on the battery installation frame, the battery upper portion can extend into the battery mounting space, allowing the extension portion to provide a certain degree of protection to the battery upper portion, helping to reduce the risk of battery damage, and prolonging the service life of the battery. Additionally, the height of the extension portion can be less than the height of the battery, which can reduce the height of the extension portion, thereby reducing the height of the extension portion, thereby lowering the weight and cost of the battery installation frame. Moreover, providing the installation structure at the position between the battery upper portion and the battery lower portion makes it possible for the battery mounting structure to be located at the lower edge of the extension portion, facilitating battery swapping operations.

In some embodiments, in the first direction, a dimension of the battery upper portion is smaller than a dimension of the battery lower portion to form a stepped surface between the battery upper portion and the battery lower portion, the bottom of the battery mounting space is open, and the stepped surface abuts against the bottom of the extension portion.

In the above technical solution, during actual installation of the battery, when the battery upper portion is inserted upward into the battery mounting space from below, the abutment between the bottom of the extension portion and the stepped surface can serve as an indication that the battery is properly assembled. This prevents the problem of the battery being overly inserted into the battery mounting space, which could cause it to squeeze and hit the vehicle underbody, thereby protecting the battery. Additionally, configuring the dimension of the battery lower portion to be larger than that of the battery upper portion can further increase the battery dimension to some extent, thereby further increasing the volumetric energy density of the battery.

In some embodiments, the battery includes two battery side portions and a battery central portion, where in a width direction of the vehicle frame, the two battery side portions are respectively located on two sides of the battery central portion, a top surface of the battery central portion is lower than a top surface of the battery side portions, to form an avoidance groove, between the two battery side portions and the battery central portion, that runs through along a length direction of the vehicle frame and has an open top for avoiding the vehicle beam, and at least one of the battery side portions and the battery central portion is detachably connected to the battery mounting structure.

In the above technical solution, the battery structure is ingeniously designed to avoid the vehicle beam, such that the spaces on the two sides of the vehicle beam in the width direction of the vehicle beam are fully utilized, which allows the overall dimension of the battery to be increased, thereby increasing the volumetric energy density of the battery. Moreover, at least one of the battery side portions and the battery central portion is detachably connected to the battery mounting structure, which helps to improve the design flexibility of the battery.

The above description is only an overview of the technical solution of this application. To more clearly understand the technical means of this application, implementation can be carried out in accordance with the contents of the specification. Furthermore, to make the above and other purposes, features, and advantages of this application more apparent and understandable, the specific embodiments of this application are provided below.

### BRIEF DESCRIPTION OF DRAWINGS

Through reading the detailed description of the preferred embodiments below, various other advantages and benefits will become clear to those of ordinary skill in the art. The accompanying drawings are provided solely for the purpose of illustrating the preferred embodiments and are not considered to limit this application. Moreover, throughout all the accompanying drawings, identical components are denoted by identical reference signs. In the accompanying drawings:
FIG. 1 is a schematic structural diagram of a vehicle according to some embodiments of this application;
FIG. 2 is an exploded schematic structural diagram of a battery according to some embodiments of this application;
FIG. 3 is a schematic assembly diagram of a frame assembly and a battery according to some embodiments of this application;
FIG. 4 is a schematic structural diagram of a frame assembly according to some embodiments of this application;
FIG. 5 is an enlarged view at portion A in FIG. 4;
FIG. 6 is a schematic assembly diagram of a frame assembly and a battery from another perspective according to an embodiment of this application;
FIG. 7 is a schematic diagram of a battery according to an embodiment of this application;
FIG. 8 is an enlarged view at portion B in FIG. 3;
FIG. 9 is a schematic diagram of a battery according to another embodiment of this application;
FIG. 10 is a partial enlarged view in FIG. 3;
FIG. 11 is a schematic diagram of a vehicle according to some embodiments of this application;
FIG. 12 is a bottom view of the vehicle in FIG. 11;
FIG. 13 is a cross-sectional view at line E-E in FIG. 12;
FIG. 14 is a cross-sectional view at line F-F in FIG. 12;
FIG. 15 is an orthographic projection view of a battery installation frame according to some embodiments of this application; and
FIG. 16 is a cross-sectional view of a battery installation frame according to some embodiments of this application.

Reference signs: vehicle 1000; frame assembly 100; battery installation frame 10; vehicle beam 20; longitudinal beam 201; cross beam 202; battery 30; battery upper portion 30a; battery lower portion 30b; installation structure 30c; stepped surface 30d; battery side portion 30e; battery central portion 30f; avoidance groove 30g; box 301; first portion 3011; second portion 3012; battery cell 302; controller 40; motor 50; vehicle frame 60; second frame 1; first direction X; first main wall 11; second main wall 12; beam avoidance groove 13; battery avoidance opening 14; beam connection structure 15; first frame 2A; extension portion 2; second direction Y; height direction Z of extension portion; shared extension portion 2a; mounting edge 21; reinforcing rib 22; weight-reducing structure 23; battery mounting structure 3; battery mounting space 4; and reinforcing portion 5.

### DESCRIPTION OF EMBODIMENTS

The embodiments of the technical solutions of this application will be described in detail below with reference to the accompanying drawings. The following embodiments are merely used to more clearly illustrate the technical solutions of this application and are therefore provided only as examples, not to limit the scope of protection of this application.

Unless otherwise defined, all technical and scientific terms used herein have the same meaning as commonly understood by those skilled in the technical field of this application; the terms used herein are for the purpose of describing specific embodiments only and are not intended to limit this application; and the terms "including" and "having" and any variations thereof in the specification, claims, and drawing descriptions of this application are intended to cover non-exclusive inclusion.

In the description of the embodiments of this application, technical terms such as "first" and "second" are used only to distinguish different objects and should not be understood as indicating or implying relative importance or implicitly indicating the quantity, specific order, or hierarchical relationship of the technical features indicated. In the description of the embodiments of this application, the term "a plurality of" means two or more, unless explicitly and specifically defined otherwise.

Reference to an "embodiment" herein means that a particular feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, the term "and/or" merely describes an association relationship between associated objects, indicating that three relationships may exist, for example, X and/or Y may indicate: X alone, X and Y together, or Y alone. Additionally, the character "/" herein generally indicates an "or" relationship between the associated objects.

In the description of the embodiments of this application, the term "a plurality of" refers to two or more (including two), similarly, "a plurality of groups" refers to two or more groups (including two groups), and "a plurality of pieces" refers to two or more pieces (including two pieces).

In the description of the embodiments of this application, the orientation or positional relationships indicated by technical terms such as "longitudinal," "transverse," "length," "width," "thickness," "upper," "lower," "front," "rear," "left," "right," "vertical," "horizontal," "top," "bottom," "inner," and "outer" are based on the orientation or positional relationships shown in the accompanying drawings, and are merely for convenience in describing the embodiments of this application and simplifying the description, rather than indicating or implying that the apparatus or element referred to must have a specific orientation, be constructed, and operate in a specific orientation, and therefore should not be construed as limiting the embodiments of this application.

In the description of the embodiments of this application, unless otherwise explicitly specified and limited, technical terms such as "installation," "connection," "linkage," and "fixing" should be understood in a broad sense, for example, as a fixed connection, a detachable connection, or an integral formation; a direct connection, an indirect connection through an intermediary, or an internal communication or interaction relationship between two elements. Those of ordinary skill in the art can understand the specific meanings of these terms in the embodiments of this application based on specific circumstances.

From the perspective of current market trends, the application of traction batteries is becoming increasingly widespread. Traction batteries are not only used in energy storage systems such as hydroelectric, thermal, wind, and solar power stations, but also widely applied in electric vehicles such as electric bicycles, electric motorcycles, and electric cars, as well as in military equipment and aerospace fields. With the continuous expansion of the application fields of traction batteries, their market demand is also continuously increasing.

In some vehicles of the related art, a tray is typically used to install a battery pack at the vehicle underbody. To be specific, the battery pack is placed on the tray, and the tray is then installed to the vehicle underbody. During battery swapping, the tray is removed, the entire battery pack in the tray is replaced, and the tray is then reinstalled to the vehicle underbody. However, during battery swapping, the energy in the battery pack in the tray is often not fully depleted, and swapping the battery at this point results in energy waste.

To address this, this application proposes a battery installation frame, where the battery installation frame includes a first frame, the first frame includes a plurality of extension portions spaced apart along a first direction and a plurality of battery mounting spaces arranged sequentially along the first direction, the battery mounting space is defined between two adjacent extension portions along the first direction, and the battery installation frame is provided with a battery mounting structure configured to mount a battery in the battery mounting space.

When such a battery installation frame is configured to install batteries in a vehicle, since the battery installation frame includes a plurality of battery mounting spaces and the battery installation frame is provided with a battery mounting structure, each battery mounting space can be used for mounting a battery, and thus batteries can be individually mounted in each battery mounting space. This allows the battery installation frame to have the function of installing a plurality of batteries. During battery swapping, only batteries that have depleted their energy can be replaced while retaining batteries with remaining energy, thereby improving the energy utilization of the batteries and alleviating the problem of energy waste.

Additionally, since the battery mounting space is defined between two adjacent extension portions, the extension portions can play a role in protecting the battery, alleviating the problem of collisions between batteries in two adjacent battery mounting spaces arranged along the first direction and the problem of heat transfer between batteries in two adjacent battery mounting spaces arranged along the first direction, thereby improving the operational reliability of the batteries.

The battery disclosed in the embodiments of this application can be used in electrical apparatuses that use a battery as a power source or in various energy storage systems that use a battery as an energy storage element. The electrical apparatuses may include, but are not limited to, mobile phones, tablets, laptops, electric toys, electric tools, battery-powered bikes, electric vehicles, ships, and spacecrafts. Electric toys may include fixed or mobile electric toys, such as gaming consoles, electric car toys, electric ship toys, and electric airplane toys, while spacecrafts may include airplanes, rockets, space shuttles, and spaceships, and the like.

For ease of explanation in the following embodiments, an embodiment of this application is described using a vehicle 1000 as an example.

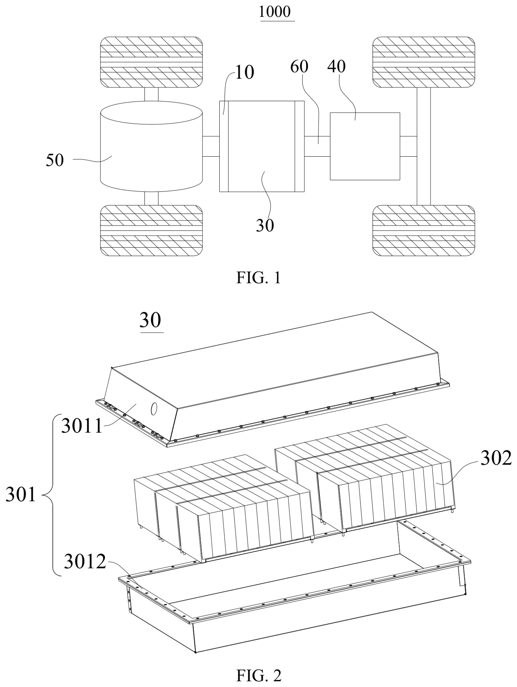

Referring to FIG. 1, FIG. 1 is a schematic structural diagram of a vehicle 1000 according to some embodiments of this application. The vehicle 1000 may be a fuel vehicle, a gas vehicle, or a new energy vehicle, where the new energy vehicle may be a battery electric vehicle, a hybrid electric vehicle, or an extended-range electric vehicle. A battery 30 is provided inside the vehicle 1000, and the battery 30 may be disposed at the bottom, front, or rear of the vehicle 1000. The battery 30 may be configured to supply power to the vehicle 1000, for example, the battery 30 may serve as an operational power source for the vehicle 1000. The vehicle 1000 may further include a controller 40 and a motor 50, where the controller 40 is configured to control the battery 30 to supply power to the motor 50, for example, for the operational power requirements during the startup, navigation, and driving of the vehicle 1000.

In some embodiments of this application, the battery 30 may not only serve as an operational power source for the vehicle 1000 but also as a driving power source for the vehicle 1000, replacing or partially replacing fuel or natural gas to provide driving power for the vehicle 1000.

Referring to FIG. 2, FIG. 2 is an exploded view of a battery 30 according to some embodiments of this application. The battery 30 includes a box 301 and a battery cell 302, with the battery cell 302 accommodated within the box 301. The box 301 is configured to provide an accommodation space for the battery cell 302, and the box 301 may adopt various structures. In some embodiments, referring to FIG. 2, the box 301 may include a first portion 3011 and a second portion 3012, where the first portion 3011 and the second portion 3012 are mutually covered, and the first portion 3011 and the second portion 3012 together define an accommodation space for accommodating the battery cell 302. The second portion 3012 may be a hollow structure with an open end, the first portion 3011 may be a plate-like structure, and the first portion 3011 covers the open end of the second portion 3012, such that the first portion 3011 and the second portion 3012 together define the accommodation space; alternatively, both the first portion 3011 and the second portion 3012 may be hollow structures with an open side, and the open side of the first portion 3011 covers the open side of the second portion 3012. Of course, the box 301 formed by the first portion 3011 and the second portion 3012 may have various shapes, such as a cylinder and a cuboid.

The battery 30 may include a battery cell 302, and the battery cell 302 may be provided in plurality. The plurality of battery cells 302 may be connected in series, parallel, or a combination thereof, where the combination refers to both series and parallel connections among the plurality of battery cells 302. The plurality of battery cells 302 may be directly connected in series, parallel, or a combination thereof, and the entirety formed by the plurality of battery cells 302 is accommodated within the box 301; alternatively, the battery 30 may also include a plurality of battery cells 302 first connected in series, parallel, or a combination to form a battery 30 module, and a plurality of battery 30 modules are then connected in series, parallel, or a combination to form an entirety, which is accommodated within the box 301. The battery 30 may further include other structures, for example, the battery 30 may also include a busbar for achieving electrical connections between the plurality of battery cells 302.

In this application, the battery cell 302 may include a lithium-ion secondary battery, a lithium-ion primary battery, a lithium-sulfur battery, a sodium-lithium-ion battery, a sodium-ion battery, magnesium-ion battery, or the like, which is not limited in the embodiments of this application. The battery cell 302 may be cylindrical, flat, cuboidal, or in other shapes, which is also not limited in the embodiments of this application. The battery cells 302 are generally classified into three types based on packaging methods: cylindrical battery cells, prismatic battery cells, and pouch battery cells, which is also not limited in the embodiments of this application.

The battery cell 302 includes a housing, an electrode assembly, and an electrolyte, where the housing is configured to accommodate the electrode assembly and the electrolyte. The electrode assembly consists of a positive electrode plate, a negative electrode plate, and a separator. The battery cell 302 operates primarily by the movement of metal ions between the positive electrode plate and the negative electrode plate. The material of the separator is not limited and may be, for example, polypropylene or polyethylene.

Generally, the positive electrode plate may include a positive electrode current collector and a positive electrode active material layer, where the positive electrode active material layer is directly or indirectly applied on the positive electrode current collector, and the positive electrode current collector not coated with the positive electrode active material layer protrudes from the positive electrode current collector coated with the positive electrode active material layer, serving as a positive electrode tab. For example, in a lithium-ion battery, the material of the positive electrode current collector may be aluminum, and the material of the positive electrode active material layer may be lithium cobalt oxide, lithium iron phosphate, ternary lithium, lithium manganese oxide, or the like.

Generally, the negative electrode plate may include a negative electrode current collector and a negative electrode active material layer, where the negative electrode active material layer is directly or indirectly applied on the negative electrode current collector, and the negative electrode current collector not coated with the negative electrode active material layer protrudes from the negative electrode current collector coated with the negative electrode active material layer, serving as a negative electrode tab. The material of the negative electrode current collector may be copper, and the material of the negative electrode active material layer may be carbon, silicon, or the like.

To ensure that large currents can pass without causing fusing, the positive electrode tab is provided in plurality and the plurality of positive electrode tabs are stacked together; and the negative electrode tab is provided in plurality and the plurality of negative electrode tabs are stacked together. The electrode assembly may be a wound structure or may be a laminated structure, which is not limited in the embodiments of this application.

As shown in FIG. 1, an embodiment of this application provides a battery installation frame 10, where the battery installation frame 10 of this embodiment of this application is configured to install a battery 30 to a vehicle frame 60 of a vehicle 1000.

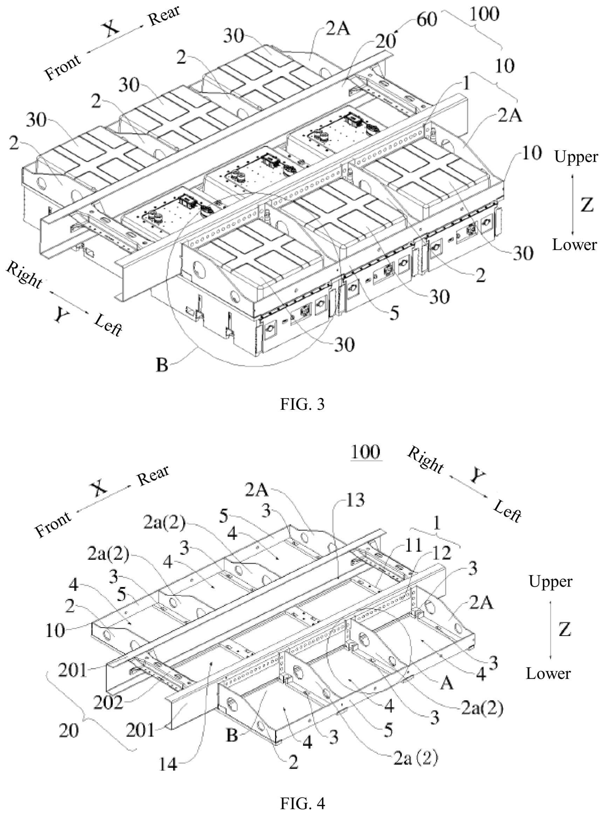

Referring to FIGs. 3 and 4, the battery installation frame 10 includes a first frame 2A, the first frame 2A includes a plurality of extension portions 2 spaced apart along a first direction X and a plurality of battery mounting spaces 4 arranged sequentially along the first direction X, the battery mounting space 4 is defined between two adjacent extension portions 2 along the first direction X, and the battery installation frame 10 is provided with a battery mounting structure 3 configured to mount a battery 30 in the battery mounting space 4.

It is worth noting that the battery installation frame 10 of this embodiment of this application can be used for battery swapping under frame of the vehicle 1000, where the battery swapping under frame (battery swapping under frame) refers to a method of replenishing vehicle energy by flexibly replacing a swappable battery system installed under the vehicle chassis. The swappable battery system (swappable battery system) is a traction battery system (referred to as battery 30 in this application) that is entirely replaced during the battery swapping process of the vehicle 1000. For example, the swappable battery system generally includes a power battery, a battery management system, a swapping electrical interface, a swapping cooling interface, a swapping mechanical interface, and the like, and can be charged and discharged in a non-vehicle-mounted state. The terms and definitions of the embodiments of this application may be in accordance with GB/T 19596 Terminology of Electric Vehicles.

It can be understood that when the battery 30 is large in dimension, the same battery 30 can be installed in a plurality of battery mounting spaces 4 simultaneously, while when the battery 30 is smaller in dimension, one battery 30 may correspond to only one battery mounting space 4, or a plurality of batteries 30 may correspond to one battery mounting space 4 simultaneously. That is, the specific mounting method depends on the form of the battery 30 and is not limited herein.

The phrase "the battery installation frame 10 is provided with a battery mounting structure 3 configured to mount a battery 30 in the battery mounting space 4" means that the battery installation frame 10 is provided with a battery mounting structure 3 capable of connecting to the battery 30, and when the battery 30 is connected to the battery mounting structure 3, at least a portion of the battery 30 can be accommodated in the battery mounting space 4, presenting a mounted state. In this embodiment of this application, the battery installation frame 10 includes a plurality of battery mounting spaces 4, and the battery installation frame 10 is provided with a mounting structure 3 corresponding to each battery mounting space 4, such that each battery mounting space 4 can be used to mount a battery 30, and the battery mounting structures 3 corresponding to different battery mounting spaces 4 can be mutually independent, allowing each battery mounting space 4 to independently swap the mounted battery 30. Herein, "corresponding" in the context of the battery mounting structure 3 corresponding to the battery mounting space 4 refers to a relationship correspondence, including but not limited to positional correspondence.

However, this is not limited thereto. For example, in some embodiments, when a plurality of battery mounting spaces 4 are used to mount the same battery 30, for instance, when two battery mounting spaces 4 correspondingly arranged along the second direction Y are used to mount the same battery 30, the battery mounting structures 3 corresponding to these two battery mounting spaces 4 may be set to be mutually independent, or may also be set in a linked form, such that when mounting the same battery 30, the linked battery mounting structures 3 help to improve swapping efficiency.

When such a battery installation frame 10 is configured to install batteries 30 in a vehicle, since the battery installation frame 10 includes a plurality of battery mounting spaces 4 and the battery installation frame 10 is provided with a battery mounting structure 3, each battery mounting space 4 can be used for mounting a battery 30, and thus batteries 30 can be individually mounted in each battery mounting space 4. This allows the battery installation frame 10 to have the function of installing a plurality of batteries 30. During battery swapping, only batteries 30 that have depleted their energy can be replaced while retaining batteries 30 with remaining energy, thereby improving the energy utilization of the batteries 30 and alleviating the problem of energy waste.

Additionally, since the battery mounting space 4 is defined between two adjacent extension portions 2, the extension portions 2 can be used to protect the battery 30, alleviating the problem of collisions between batteries 30 in two adjacent battery mounting spaces 4 arranged along the first direction and the problem of heat transfer between batteries 30 in two adjacent battery mounting spaces 4 arranged along the first direction, thereby improving the operational reliability of the batteries 30. That is, the portion of the battery 30 accommodated in the battery mounting space 4 can be protected by the extension portions 2 on two sides, alleviating problems such as collisions and heat transfer between batteries 30 in two adjacent battery mounting spaces 4.

The battery mounting structure 3 can be provided on the extension portion 2, or the battery mounting structure 3 may not be provided on the extension portion 2, which is not limited herein. The distribution position, quantity, and structural form of the battery mounting structure 4 can be flexibly designed to meet the mounting requirements of the battery 30. The structure of the battery mounting structure 3 is not limited and may include, but is not limited to, mounting grooves, mounting holes, mounting protrusions, mounting pins, or mounting screws, which is not limited herein.

For example, when the battery installation frame 10 is configured to install a battery 30 on a vehicle 1000, the first direction X is set as the length direction of the vehicle 1000, and the battery mounting structure 3 is provided on the extension portion 2. In this case, neither the battery mounting structure 3 nor the extension portion 2 occupies space of the battery 30 in the width direction of the vehicle 1000, thereby increasing the dimension of the battery mounting space 4 in the width direction of the vehicle 1000, increasing the dimension of the battery 30 in the width direction of the vehicle 1000, and facilitating an increase in the volumetric energy density of the battery 30. Moreover, setting the first direction X as the length direction of the vehicle 1000, due to the relatively large length space of the vehicle 1000, also helps to increase the dimension or quantity of battery mounting spaces 4 in the length direction of the vehicle 1000, thereby helping to further increase the volumetric energy density or quantity of batteries 30.

In addition, the plurality of extension portions 2 are spaced apart along the first direction X, and the battery mounting space 4 is defined between two adjacent extension portions 2 along the first direction X, allowing for adjustment of the quantity of battery mounting spaces 4 by increasing or decreasing the quantity of extension portions 2, that is, by flexibly setting the quantity of extension portions 2, providing the battery installation frame 10 with high scalability, enabling the battery installation frame 10 to mount a plurality of batteries 30 in the first direction X, that is, achieving multi-pack mounting functionality, thereby increasing the driving range of the vehicle 1000 per battery swap.

The battery installation frame 10 according to this embodiment of this application is capable of mounting a plurality of batteries 30 in the first direction X, that is, achieving multi-pack mounting functionality. When the battery installation frame 10 is used in a vehicle 1000, the first direction X can be set as the length direction of the vehicle 1000, enabling the battery installation frame 10 to have the function of mounting a plurality of batteries 30 along the length direction of the vehicle 1000. This helps to increase in the quantity of batteries 30 that can be arranged on the vehicle 1000 and helps to enlarge the dimension of the battery mounting space 4 in the length and width directions of the vehicle 1000 to increase the volumetric energy density of the battery 30. Moreover, since the battery mounting space 4 is defined between two adjacent extension portions 2 along the first direction X, the extension portions 2 can be used to protect the battery 30, alleviating problems such as collisions and heat transfer between batteries 30 in two adjacent battery mounting spaces 4 along the first direction X.

In some embodiments, at least two of the battery mounting spaces 4 on the first frame 2A have consistent lengths in the first direction X.

This facilitates the installation of batteries 30 of the same specification in the at least two of the battery mounting spaces 4 with consistent lengths in the first direction X, allowing a battery 30 to be installed in any one of these battery mounting spaces 4, thereby improving the installation efficiency and installation flexibility.

In some embodiments, at least two of the battery mounting spaces 4 on the first frame 2A have inconsistent lengths in the first direction X.

Thus, when batteries 30 of different specifications are installed in the at least two of the battery mounting spaces 4 with inconsistent lengths in the first direction X, batteries 30 of different specifications can be installed in battery mounting spaces 4 of corresponding dimensions/ This enables the configurations of the battery mounting spaces 4 to match the specifications of the corresponding batteries 30, thereby reducing installation space waste, and allowing the battery installation frame 10 to accommodate at least two types of batteries 30 with different specifications.

It is worth noting that the lengths of battery mounting spaces 4 arranged along the first direction X on the first frame 2A may be all consistent, all inconsistent, or some consistent and some inconsistent. Flexible configurations are allowed. When all battery mounting spaces 4 arranged along the first direction X on the first frame 2A are configured such that at least two of the battery mounting spaces 4 have consistent lengths in the first direction X, while at least two of the battery mounting spaces 4 have inconsistent lengths in the first direction X, this can meet both the flexible installation requirements of batteries 30 of the same specification and the installation requirements of batteries 30 of different specifications.

In some embodiments, as shown in FIGs. 3 and 4, the battery installation frame 10 includes two of the first frames 2A spaced apart along a second direction Y, each of the first frame 2A includes a plurality of battery mounting spaces 4 arranged sequentially along the first direction X, and the second direction Y intersects the first direction X, for example, at an obtuse angle, acute angle, or right angle.

Thus, by configuring the battery installation frame 10 to include two of the first frames 2A, each including a plurality of battery mounting spaces 4 arranged sequentially along the first direction X, each first frame 2A is capable of mounting a plurality of batteries 30 in the first direction X. Moreover, the two first frames 2A are spaced apart along the second direction Y, which can fully utilize the space in the second direction Y to increase the quantity of batteries 30 that the battery installation frame 10 can mount, facilitating an increase in the driving range of the vehicle 1000 per battery swap.

When the battery installation frame 10 is installed on the vehicle frame 60, the first direction X can be set as the length direction of the vehicle frame 60, and the second direction Y can be set as the width direction of the vehicle frame 60. Since the two first frames 2A are spaced apart along the second direction Y, which is equivalent to being spaced along the width direction of the vehicle frame 60, this allows the gap between the two first frames 2A to avoid the vehicle beam 20 of the vehicle frame 60. As a result, batteries 30 can be distributed on two sides of the vehicle beam 20 in a width direction of the vehicle beam 20, to be specific, providing the battery installation frame 10 with a dual-side mounting space configuration to fully utilize the underbody space of the vehicle 1000, increasing the quantity of mountable batteries 30. In this embodiment of this application, the length direction of the vehicle frame 60, the length direction of the vehicle 1000, and the length direction of the vehicle beam 20 are consistent, and the width direction of the vehicle frame 60, the width direction of the vehicle 1000, and the width direction of the vehicle beam 20 are consistent.

In some embodiments, as shown in FIGs. 3 and 4, the extension portions 2 of the two first frames 2A are arranged in a one-to-one correspondence along the second direction Y, length extension directions of the two correspondingly arranged extension portions 2 are the same, and orthographic projections of the two extension portions 2 along the length extension direction of the extension portions 2 overlap.

Thus, the battery mounting spaces 4 defined by the two first frames 2A and corresponding to each other in the second direction Y have the same dimension and corresponding positions. Therefore, when the battery installation frame 10 is used to install a large dimensional and regularly shaped battery 30, two side portions of the battery 30 can fit with the two correspondingly arranged battery mounting spaces 4 in the second direction Y. This enables the two correspondingly arranged battery mounting spaces 4 in the second direction Y to be used together to install a large dimensional battery 30, facilitating an increase in the energy density of the installed battery 30. Moreover, when the extension portions 2 are provided with the battery mounting structure 3, the two extension portions 2 corresponding in positions along the second direction Y can respectively support the two side portions of the large dimensional battery 30, so as to enhance the stress balance and mounting stability of the battery 30.

In some embodiments, as shown in FIGs. 3 and 4, the first direction X is perpendicular to the second direction Y, the length extension direction of the extension portions 2 is the second direction Y, and the battery mounting spaces 4 on the two first frames 2A are symmetrically arranged.

Thus, by configuring the battery installation frame 10 to include two of the first frames 2A, each including a plurality of battery mounting spaces 4 arranged sequentially along the first direction X, each first frame 2A is capable of mounting a plurality of batteries 30 in the first direction X. Moreover, the two first frames 2A are spaced apart along the second direction Y, which can fully utilize the space in the second direction Y to increase the quantity of batteries 30 that the battery installation frame 10 can mount, facilitating an increase in the driving range of the vehicle 1000 per battery swap. The battery mounting spaces 4 on the two first frames 2A are symmetrically arranged, allowing the two end portions of a symmetrically shaped and large dimensional battery 30 to be correspondingly mounted in the symmetrically arranged battery mounting spaces 4, meeting the mounting requirements of large dimensional batteries 30. Additionally, the batteries 30 or local portions of a battery 30 installed in the symmetrical battery mounting spaces 4 are more evenly distributed, and the force applied to the battery installation frame 10 can be relatively balanced, which helps to enhance the structural stability of the battery installation frame 10.

When the battery installation frame 10 is installed on the vehicle frame 60, the first direction X can be set as the length direction of the vehicle frame 60, and the second direction Y can be set as the width direction of the vehicle frame 60. Since the two first frames 2A are spaced apart along the second direction Y, this allows the gap between the two first frames 2A to avoid the vehicle beam 20. As a result, batteries 30 can be distributed on two sides of the vehicle beam 20, with each side of the vehicle beam 20 capable of mounting a plurality of batteries 30 arranged along the length direction of the vehicle frame 60, providing the battery installation frame 10 with dual-side multi-mounting space.

In some embodiments, as shown in FIGs. 3 and 4, the battery installation frame 10 further includes a second frame 1, the second frame 1 connects the two first frames 2A spaced apart along the second direction Y, the second frame 1 includes a beam avoidance groove 13, and the beam avoidance groove 13 has an opening running through along the first direction X. For example, the first direction X can be set to be consistent with the length direction of the vehicle beam 20.

Thus, by providing the second frame 1, the two first frames 2A can be connected into an integral structure through the second frame 1, such that, for example, fixing the second frame 1 to the vehicle frame 60 achieves the fixation of the battery installation frame 10, allowing each first frame 2A to reach its operational position, thereby reducing the assembly difficulty of the battery installation frame 10. Meanwhile, the beam avoidance groove 13 of the second frame 1 has an opening running through along the first direction X, allowing a portion of the vehicle beam 20 to extend into the beam avoidance groove 13, enabling the beam avoidance groove 13 to avoid the vehicle beam 20, preventing interference between the battery installation frame 10 and the vehicle beam 20, and improving the compactness of the fit between the battery installation frame 10 and the vehicle beam 20. This facilitates the use of space near the vehicle beam 20 to arrange batteries 30, thereby facilitating an increase in the dimension and volumetric energy density of the batteries 30.

Additionally, the beam avoidance groove 13 can be configured with an open top, allowing the main body portion 1 to be pushed upward from below, and enabling the vehicle beam 20 to enter the beam avoidance groove 13, thereby helping to reduce the assembly difficulty of the battery installation frame 10 to the vehicle frame 60. For a vehicle frame 60 that has already been assembled, the battery installation frame 10 can be installed subsequently, making the battery installation frame 10 applicable to various vehicle models. This application is not limited thereto. For example, in other embodiments of this application, the beam avoidance groove 13 can be configured with an open bottom. In this case, the assembly of the battery installation frame 10 can be assembled with the vehicle frame 60 can be carried out simultaneously during the assembly process of the vehicle frame 60.

In some embodiments, as shown in FIG. 4, the second frame 1 includes a plurality of first main walls 11, the plurality of first main walls 11 are spaced apart along the first direction X to form a battery avoidance opening 14 between two adjacent first main walls 11, and the battery avoidance opening 14 is arranged opposite the battery mounting space 4 along the second direction Y.

Thus, by providing the battery avoidance opening 14, when a larger dimensional battery 30 is installed in the battery mounting space 4, the battery 30 can be accommodated through the battery avoidance opening 14 to prevent interference between the battery 30 and the second frame 1. For example, when the battery installation frame 10 is used to install a large dimensional and regularly shaped battery 30, a portion of the battery 30 corresponding to the first frame 2A can extend into the battery mounting space 4, and a portion of the battery 30 corresponding to the second frame 1 can extend into the battery avoidance opening 14, facilitating the installation of larger dimensional batteries 30 and increasing the energy density of the installed batteries 30.

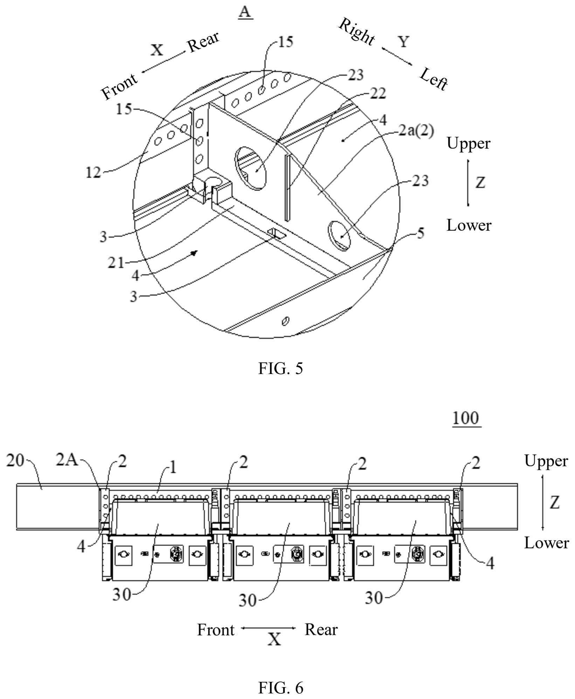

In some embodiments, as shown in FIGs. 4 and 5, the second frame 1 further includes two second main walls 12, the second main walls 12 extend along the first direction X, the two second main walls 12 are spaced apart and connected along the second direction Y on two sides of each of the first main walls 11, such that the beam avoidance groove 13 is defined between the first main wall 11 and the two second main walls 12, the first frame 2A is arranged on a side of the second main wall 12 away from the first main wall 11 in the second direction Y, and each of the extension portions 2 is connected to the second main wall 12.

Thus, by providing the second main walls 12, allows the plurality of first main walls 11 and the second main walls 12 to be connected into an integral structure, facilitating the reduction of the difficulty in configuring the second frame 1, and contributing to defining the extension direction of the beam avoidance groove 13 such that the beam avoidance groove 13 extends along the first direction X. The first frame 2A is arranged on a side of the second main wall 12 away from the first main wall 11 in the second direction Y, and each of the extension portions 2 is connected to the side of the second main wall 12 away from the first main wall 11 in the second direction Y, avoiding interference between the extension portions 2 and the vehicle beam 20, and facilitating the expansion of the battery mounting space 4 in the second direction Y, thereby helping to increase the dimension and volumetric energy density of the batteries 30.

In some embodiments, as shown in FIGs. 4 and 5, a height of the extension portion 2 slopes downward in a direction away from the second main wall 12. It is worth noting that "slopes downward" may refer to a gradual decrease or a stepped decrease. Herein, two ends of the extension portion 2 in the height direction Z are defined as upper and lower ends, and when the height direction Z of the extension portion 2 is consistent with the height direction of the vehicle 1000, the two ends in the height direction Z of the extension portion 2 are also the upper and lower ends in the gravity direction.

Thus, by configuring the height of the extension portion 2 to tend to decrease in the second direction Y along a direction away from the second main wall 12, the height of a region of the extension portion 2 away from the second main wall 12 is relatively small.

To be specific, the height of an end of the extension portion 2 connected to the second main wall 12 is relatively large, while the height of an end of the extension portion 2 away from the second main wall 12 is relatively small. This can enhance the connection strength between the extension portion 2 and the second main wall 12, improve the mounting reliability of the extension portion 2 for the battery 30, and reduce the weight of the extension portion 2, thereby lowering the load of the vehicle 1000.

In some embodiments, as shown in FIGs. 4 and 5, a lower edge of the extension portion 2 extends along a horizontal line, the battery mounting structure 3 is located at the lower edge of the extension portion 2, and an upper edge of the extension portion 2 slopes downward in a direction away from the second main wall 12. It is worth noting that "slopes downward" may refer to a gradual decrease or a stepped decrease.

Thus, configuring the lower edge of the extension portion 2 to extend along a horizontal line ensures that the battery mounting structures 3 are located at the same horizontal height, thereby facilitating operations of mounting the battery 30.

For example, when a tool is used and extended upward to the position of the battery mounting structure 3 to perform the mounting connection between the battery mounting structure 3 and the battery 30, the raised position of the tool is lower than the extension portion 2, which can reduce the lifting height required for the tool. Moreover, the tool does not need to extend between the battery 30 and the extension portion 2, eliminating the need to increase the gap between the battery 30 and the extension portion 2 to accommodate the tool. This reduces space waste, allowing the saved space to be used to further increase the dimension of the battery 30, thereby increasing the volumetric energy density of the battery 30. This helps to reduce the difficulty of mounting the battery 30.

Meanwhile, the upper edge of the extension portion 2 slopes downward in a direction away from the second main wall 12, resulting in a relatively large height at the end of the extension portion 2 connected to the second main wall 12 and a relatively small height at the end away from the second main wall 12. This can enhance the connection strength between the extension portion 2 and the second main wall 12, improve the mounting reliability of the extension portion 2 for the battery 30, and reduce the weight of the extension portion 2, thereby lowering the load of the vehicle 1000.

For example, as shown in FIGs. 4 and 5, a mounting edge 21 is provided at the lower edge of the extension portion 2, and when the battery mounting structure 3 is located at the lower edge of the extension portion 2, it can be provided on the mounting edge 21, and in this case, the mounting edge 21 can be configured to extend horizontally. This ensures that the battery mounting structures 3 are located at the same horizontal height, facilitating operations of mounting the battery 30.

In some embodiments, as shown in FIGs. 4 and 5, at least one of the first frame 2A and the second frame 1 is provided with a beam connection structure 15.

"At least one of the first frame 2A and the second frame 1 is provided with a beam connection structure 15" includes configurations where the beam connection structure 15 is provided on the first frame 2A, the beam connection structure 15 is provided on the second frame 1, or the beam connection structure 15 is provided on both the first frame 2A and the second frame 1. The specific structure of the beam connection structure 15 is not limited and may include, for example, threaded holes, connection holes, or snap-fit structures.

As such, since the second frame 1 cooperates with the vehicle beam 20 through the beam avoidance groove 13, both the second frame 1 and the first frame 2A can have a portion close to the vehicle beam 20. In this way, by providing the beam connection structure 15 to connect to the vehicle beam 20, the battery installation frame 10 can be easily installed onto the vehicle frame 60.

In some embodiments, at least one of a heat insulation structural member, a heat dissipation structural member, or a buffer structural member is provided with a side of the extension portion 2 facing the battery mounting space 4.

In the above technical solution, providing a heat insulation structural member facilitates heat insulation for the battery 30, alleviating heat transfer effects between two adjacent batteries 30. The heat insulation structural member includes, but is not limited to, heat insulation cotton, heat insulation film, or other heat insulation structures, which is not limited herein.

Providing a heat dissipation structural member facilitates heat dissipation for the battery 30, thereby alleviating overheating of the battery 30 and reducing the risk of thermal runaway. The heat dissipation structural member includes, but is not limited to, radiators, coolers, fans, or other heat dissipation structures, which is not limited herein.

Providing a buffer structural member helps to buffer the battery 30, reducing rigid contact between the battery 30 and the buffer portion, thereby protecting the battery 30 and helping to prolong the service life of the battery. The buffer structural member includes, but is not limited to, sponge, rubber components, elastic components, or other buffer structures, which is not limited herein.

In some embodiments, as shown in FIGs. 4 and 5, the battery mounting structure 3 is provided on the extension portion 2.

In the above technical solution, by providing the battery mounting structure 3 on the extension portion 2, the battery mounting structure 3 occupies only the space in the first direction X. This can avoid the battery mounting structure 3 from occupying space in other directions, such as avoiding the battery mounting structure 3 from occupying space in the width and height directions of the vehicle 1000, facilitating an increase in the dimension of the battery 30 in these more constrained directions (for example, the width and height directions of the vehicle 1000), and increasing the volumetric energy density of the battery 30. Moreover, the space on the extension portion 2 is relatively large, facilitating flexible configuration of the distribution position, quantity, and structural form of the battery mounting structure 3 on the extension portion 2, so as to enhance the mounting strength of large dimensional batteries 30.

In some embodiments, as shown in FIGs. 4 and 5, the battery mounting structure 3 is arranged on a side of the extension portion 2 facing the battery mounting space 4.

Thus, the battery mounting structure 3 is arranged on a side of the extension portion 2 facing the battery mounting space 4. Therefore, the battery mounting structure 3 corresponds to the battery mounting space 4 it faces and is configured to mount the battery 30 in the battery mounting space 4 that the battery mounting structure 3 faces, thereby clearly defining the correspondence between the battery mounting structure 3 and the battery mounting space 4. When the battery 30 is inserted into the battery mounting space 4, it can be connected to the battery mounting structure 3 facing the battery mounting space 4, facilitating the mounting of the battery 30. Moreover, when there are a plurality of battery mounting spaces 4, the battery mounting structures 3 corresponding to different battery mounting spaces 4 are positioned differently and do not interfere with each other. This allows the battery mounting structure 3 corresponding to each battery mounting space 4 to have ample space for flexible configuration, enabling the battery mounting structure 3 to more easily and reliably mount the battery 30.

In some embodiments, as shown in FIGs. 4 and 5, at least one extension portion 2 located in the middle among the plurality of extension portions 2 is a shared extension portion 2a, the shared extension portion 2a has the battery mounting spaces 4 on two sides in the first direction X, and the battery mounting structures 3 are respectively arranged on two sides of the shared extension portion 2a facing the battery mounting spaces 4 on two sides.

It is worth noting that "at least one extension portion 2 located in the middle among the plurality of extension portions 2 is a shared extension portion 2a" means that among the plurality of extension portions 2 spaced apart along the first direction X, at least one extension portion 2 other than the two extension portions 2 at the two ends is a shared extension portion 2a. For example, when four extension portions 2 are spaced apart along the first direction X, at least one of the two middle extension portions 2 is a shared extension portion 2a. Two battery mounting spaces 4 arranged adjacently along the first direction X are separated by the shared extension portion 2a.

Thus, when the quantity of battery mounting spaces 4 spaced apart along the first direction X is fixed, the quantity of extension portions 2 spaced apart along the first direction X can be reduced, facilitating cost reduction and lowering the load of the vehicle 1000. For example, in a case of the minimum quantity of battery mounting spaces 4, the quantity of extension portions 2 spaced apart in the first direction X can be one more than the quantity of battery mounting spaces 4, meaning only one extension portion 2 is provided between two adjacent battery mounting spaces 4 along the first direction X, facilitating cost reduction and lowering the load of the vehicle 1000.

However, this application is not limited thereto. For example, two extension portions 2 can be provided between two adjacent battery mounting spaces 4 along the first direction X. In this way, each extension portion 2 can be configured such that the battery mounting structure 3 thereon corresponds only to the battery mounting space 4 on one side, thereby reducing the load-bearing force of each extension portion 2 on the battery 30, and improving the mounting reliability of the battery 30.

For example, referring again to FIG. 4, the battery installation frame 10 includes four extension portions 2 spaced apart along the first direction X, defining three battery mounting spaces 4, with the two middle extension portions 2 being shared extension portions 2a. Of course, the quantity of battery mounting spaces 4 in the above description is for illustrative purposes only. For example, the quantity of battery mounting spaces 4 arranged in the first direction X of the battery installation frame 10 may be two, three, five, or more, which can be set according to the specific requirements of the vehicle 1000.

Additionally, the quantity of extension portions 2 may not be only one more than the quantity of battery mounting spaces 4. For example, three battery mounting spaces 4 may be defined by five or six extension portions 2. However, it can be understood that when the quantity of extension portions 2 is not only one more than the quantity of battery mounting spaces 4, the quantity of extension portions 2 used can be saved, reducing the cost and weight of the battery installation frame 10.

Meanwhile, by arranging the battery mounting structures 3 on two sides of the shared extension portion 2a facing the battery mounting spaces 4 on two sides, the battery mounting spaces 4 on either side of the shared extension portion 2a can achieve mounting of the battery 30, and the battery mounting structures 3 on the two sides of the shared extension portion 2a are both integrated on the shared extension portion 2a, helping to reduce the difficulty of configuring the battery mounting structures 3.

In some embodiments, the battery mounting structures 3 on two sides of the shared extension portion 2a in the first direction X are offset in their orthographic projections on a projection plane perpendicular to the first direction X. For example, a distance from any battery mounting structure 3 on one side of the shared extension portion 2a to the second frame 1 in the second direction Y is different from a distance from any battery mounting structure 3 on the other side of the shared extension portion 2a to the second frame 1 in the second direction Y.

Thus, the battery mounting structures 3 on two sides of the shared extension portion 2a are configured to are offset in their orthographic projections on a projection plane perpendicular to the first direction X, which facilitates more reasonable the stress dispersion on the shared extension portion 2a. When batteries 30 in the battery mounting spaces 4 on the two sides of the shared extension portion 2a are connected to the battery mounting structures 3 on the two sides of the shared extension portion 2a, respectively, problems such as deformation or fracture of the shared extension portion 2a caused by stress concentration can be alleviated, prolonging the service life of the shared extension portion, and improving the mounting reliability of the battery 30.

In some embodiments, referring to FIGs. 4 and 5, the extension portion 2 includes a mounting edge 21 protruding into the battery mounting space 4, and the battery mounting structure 3 is located on the mounting edge 21.

Thus, providing the mounting edge 21 helps to reduce the configuration difficulty of the battery mounting structure 3, making it easy to position the battery mounting structure 3 on a side of the extension portion 2 facing the battery mounting space 4. Moreover, the mounting edge 21 can provide direct or indirect support to the battery 30 to some extent, enhancing the mounting stability of the battery 30.

In some embodiments, as shown in FIGs. 4 and 5, the extension portions 2 on two sides of the battery mounting space 4 in the first direction X are each provided with the battery mounting structure 3.

Thus, two sides of a battery 30 mounted in the battery mounting space 4 can be connected to the battery mounting structures 3 of the extension portions 2 on two sides of the battery mounting space 4 in the first direction X, enabling the extension portions 2 on the two sides of the battery mounting space 4 in the first direction X to bear the load of the battery 30 in the battery mounting space 4. The battery mounting structures 3 on the two sides can disperse the stress, thereby alleviating problems such as deformation or fracture of the extension portion 2 caused by stress concentration, prolonging the service life of the extension portion 2, and enhancing the mounting reliability of the battery 30.

In some embodiments, the battery mounting structures 3 on two sides of the battery mounting space 4 in the first direction X are offset in their orthographic projections on a projection plane perpendicular to the first direction X. For example, a distance from any battery mounting structure 3 on one side of the battery mounting space 4 to the second frame 1 in the second direction Y is different from a distance from any battery mounting structure 3 on the other side of the battery mounting space 4 to the second frame 1 in the second direction Y.

Thus, configuring the battery mounting structures 3 on two sides of the battery mounting space 4 to are offset in their orthographic projections on a projection plane perpendicular to the first direction X further facilitates stress dispersion by the battery mounting structures 3 on the two sides, further alleviating problems such as deformation or fracture of the extension portion 2 caused by stress concentration.

Additionally, when the battery mounting structures 3 on the two sides of the shared extension portion 2a in the first direction X are offset in their orthographic projections on the projection plane perpendicular to the first direction X, and the battery mounting structures 3 on two sides of the battery mounting space 4 in the first direction X are offset in their orthographic projections on the projection plane perpendicular to the first direction X, the plurality of extension portions 2 can be constructed with identical structures. This helps to simplify the structure, facilitates processing, reduces costs, and is conducive to improving assembly efficiency.

In some embodiments, a plurality of battery mounting structures 3 are provided on a side of the extension portion 2 facing the battery mounting space 4, and at least two of the battery mounting structures are spaced apart along the length direction of the extension portion 2 (for example, the second direction Y shown in FIG. 4). This arrangement facilitates full utilization of the space in the length direction of the extension portion 2, allowing for the arrangement of a greater quantity of battery mounting structures 3, thereby enhancing the mounting stability of the battery 30 or helping to increase the quantity of batteries 30 mounted in the battery mounting space 4.

In some embodiments, the extension portion 2 is plate-shaped, with a thickness direction as the first direction X, a length direction as a second direction Y, and a width direction as a height direction Z.

Thus, by configuring the extension portion 2 as plate-shaped and defining the first direction X and the second direction Y as described above, the battery mounting space 4 can be located on one or two sides of the extension portion 2 in the thickness direction of the extension portion 2, which can fully utilize the length structural characteristics of the extension portion 2 to define the battery mounting space 4, enabling the extension portion 2 to occupy less space while defining a larger battery mounting space 4.

Additionally, the battery installation frame 10 defines a plurality of battery mounting spaces 4 in the thickness direction of the extension portion 2, with a distance between two adjacent battery mounting spaces 4 in the thickness direction of the extension portion 2 being the thickness of the extension portion 2, resulting in a smaller gap between the two adjacent battery mounting spaces 4. This allows for more battery mounting spaces 4 to be arranged in the thickness direction of the extension portion 2, further improving space utilization.

For example, when the thickness direction of the extension portion 2 is the same as the length direction of the vehicle 1000, and the length direction of the extension portion 2 is the same as the width direction of the vehicle 1000, the battery mounting space 4 can be expanded in the length and width directions of the vehicle 1000, thereby increasing the driving range of the vehicle 1000 per battery swap.

In some embodiments, referring to FIG. 5, the extension portion 2 is provided with reinforcing ribs 22 and/or a weight-reducing structure 23.

Thus, providing reinforcing ribs 22 helps to enhance the structural strength of the extension portion 2, alleviating problems related to stress-induced deformation of the extension portion 2 and improving the mounting reliability of the extension portion 2 for the battery 30.

The reinforcing ribs 22 may include, but are not limited to, strip-like reinforcing protrusions or localized thickening of the extension portion 2, and the structural form of the reinforcing ribs 22 is not limited. For example, they may be linear, curved, or cross-shaped, which is not limited herein.

For example, when a battery 30 is mounted on the battery mounting structure 3 of the extension portion 2, the position of the battery mounting structure 3 on the extension portion 2 is subject to concentrated stress, and prone to deformation and damage. Therefore, at least some of the reinforcing ribs 22 can be arranged corresponding to the battery mounting structure 3, thereby enhancing the structural strength of the extension portion 2 with a reduced quantity of reinforcing ribs 22, and improving the mounting reliability of the extension portion 2 for the battery 30.

For example, when the extension portion 2 is provided with a plurality of battery mounting structures 3, at least some of the reinforcing ribs 22 are arranged corresponding to a position between two adjacent battery mounting structures 3. When a battery 30 is mounted on the battery mounting structure 3 of the extension portion 2, the position of the battery mounting structure 3 is subject to concentrated stress, and prone to deformation and damage. Arranging at least some of the reinforcing ribs 22 between two adjacent battery mounting structures 3 can enhance the structural strength of the extension portion 2 between the two adjacent battery mounting structures 3, alleviate problems such as fracture between the two adjacent battery mounting structures 3 caused by stress concentration, and improve the mounting reliability of the extension portion 2 for the battery 30.

Providing a weight-reducing structure 23 helps to reduce the weight of the extension portion 2, facilitating a lightweight design of the extension portion 2. The weight-reducing structure 23 may include, but is not limited to, weight-reducing holes, weight-reducing grooves, or thinning treatments, which is not limited herein.

Additionally, when the extension portion 2 is provided with both the reinforcing ribs 22 and the weight-reducing structure 23, since the reinforcing ribs 22 increase the weight of the extension portion 2, arranging the weight-reducing structure 23 can reduce the weight. In this way, the reliability and lightweight design of the extension portion 2 can be achieved.

In some embodiments, referring to FIG. 4, the first frame 2A further includes a reinforcing portion 5, the reinforcing portion 5 connecting at least two of the extension portions 2.

Thus, this arrangement helps to enhance the overall structural strength of the battery installation frame 10, alleviate deformation of the extension portion 2 caused by stress, and improve the mounting reliability of the battery 30.

For example, the reinforcing portion 5 and the second frame 1 are respectively arranged on two sides of the extension portion 2 in the second direction Y.

Thus, two ends of the two extension portions 2 defining the battery mounting space 4 can be connected in the second direction Y through the second frame 1 and the reinforcing portion 5, respectively. This forms a ring-shaped structure around the battery mounting space 4, providing higher structural strength, greater mounting reliability for the battery 30, and more comprehensive protection of the battery 30 from all sides, while allowing flexible selection of the position of the battery mounting structure 3.

According to a second aspect, referring to FIGs. 3 and 4, this application provides a frame assembly 100 including a vehicle frame 60 and the battery installation frame 10 according to any one of the embodiments described above, where the battery installation frame 10 is configured to install a battery 30 to the vehicle frame 60, and the first direction X is a length direction of the vehicle frame 60.

To be specific, the battery installation frame 10 is installed to the vehicle frame 60, and the battery 30 is then connected to the battery mounting structure 3, so as to achieve the assembly of the battery 30 to the battery installation frame 10, enabling the battery installation frame 10 to install the battery 30 to the vehicle frame 60.

Thus, when such a battery installation frame 10 is configured to install batteries 30 in a vehicle, since the battery installation frame 10 includes a plurality of battery mounting spaces 4 arranged along the length direction of the vehicle frame 60, the battery installation frame 10 can fully utilize the space in the length direction of the vehicle frame 60 to install a greater quantity of batteries 30. During battery swapping, only batteries 30 that have depleted their energy can be replaced while retaining batteries 30 with remaining energy, thereby improving the energy utilization of the batteries 30 and alleviating the problem of energy waste.

In some embodiments, the battery installation frame 10 is arranged at the bottom of the vehicle frame 60, the vehicle frame 60 includes a vehicle beam 20, the first frame 2A is provided on at least one side of the vehicle beam 20 in a width direction of the vehicle beam 20, and at least a portion of the first frame 2A is higher than a bottom surface of the vehicle beam 20 of the vehicle frame 60 in a height direction Z of the vehicle frame 60, such that at least a portion of the battery mounting space 4 is higher than the bottom surface of the vehicle beam 20.

In this embodiment of this application, the length direction of the vehicle frame 60, the length direction of the vehicle 1000, and the length direction of the vehicle beam 20 are consistent, and the width direction of the vehicle frame 60, the width direction of the vehicle 1000, and the width direction of the vehicle beam 20 are consistent. The vehicle beam 20 is a central beam located at the bottom of the vehicle 1000 and extending along the length direction of the vehicle 1000, also known as the underbody main beam. It is worth noting that the specific composition of the vehicle beam 20 according to the embodiments of this application is not limited. For example, as shown in FIGs. 3 and 4, the vehicle beam 20 may include two longitudinal beams 201 extending along the length direction of the vehicle 1000 (for example, the first direction X shown in FIG. 4) and at least one cross beam 202 extending along the width direction of the vehicle 1000 (for example, the second direction Y shown in FIG. 4), with the two longitudinal beams 201 spaced apart along the width direction of the vehicle 1000, and the cross beam 202 connecting the two longitudinal beams 201.

Thus, the battery mounting space 4 is not being entirely below the vehicle beam 20 but having at least a portion higher than the bottom surface of the vehicle beam 20 and located on at least one side of the vehicle beam 20 in the width direction of the vehicle beam 20, which can fully utilize the bottom space of the vehicle frame 60 to arrange the extension portions 2 and battery mounting spaces 4, facilitating the mounting of larger dimensional batteries 30 on the battery installation frame 10, thereby increasing the driving range of the vehicle 1000 per battery swap.

In some embodiments, the first frames 2A are symmetrically arranged on two sides of the vehicle beam 20 in the width direction of the vehicle beam 20. To be specific, the first frames 2A are respectively provided on two sides of the vehicle beam 20 in the width direction of the vehicle beam 20, with the first frames 2A on the two sides of the vehicle beam 20 in the width direction of the vehicle beam 20 being symmetrically arranged, which can simplify the structure of the battery installation frame 10, facilitate processing, and fully utilize the underbody space to mount a greater quantity or larger dimensional batteries 30.

According to a third aspect, this application provides a vehicle 1000 including a battery 30 and the frame assembly 100 according to any one of the embodiments described above, where at least a portion of the battery 30 is accommodated in the battery mounting space 4.

Thus, at least a portion of the battery 30 being accommodated in the battery mounting space 4, enabling the battery 30 to be mounted on the vehicle 1000, increasing the ground clearance of the battery 30 to increase the ground clearance of the vehicle 1000, and facilitating full utilization of the battery mounting space 4 to reduce the installation space occupied by the battery 30. Moreover, this arrangement helps to increase the quantity of mounted batteries 30, allowing for selective battery swapping as needed, and reducing energy waste.

For example, the bottom of the battery mounting space 4 is open, allowing the battery 30 to be inserted upward into the battery mounting space 4 from below, thereby facilitating battery 30 installation. Further, the battery mounting space 4 can be configured with both the bottom and top open, which can improve space utilization in the height direction, thereby increasing the height dimension and volumetric energy density of the battery 30.

In some embodiments, the battery 30 is detachably installed in any one of the battery mounting spaces 4.

Thus, the battery 30 can be installed in any one of the battery mounting spaces 4. This can increase the versatility of the battery mounting spaces 4, thereby reducing the difficulty of mounting the battery 30, and improving the flexibility of selecting installation positions for battery swapping.

This application is not limited thereto. For example, in other embodiments, the battery 30 can be configured to be detachably installed only in a battery mounting space 4 of a corresponding dimension.

In some embodiments, as shown in FIGs. 3 and 6, the vehicle 1000 includes a plurality of the batteries 30 arranged along the first direction X, and the plurality of batteries 30 are respectively installed in a one-to-one correspondence in the plurality of battery mounting spaces 4.

Thus, the plurality of batteries 30 are respectively installed in a one-to-one correspondence in the plurality of battery mounting spaces 4, enabling the first frame 2A to achieve the mounting of a plurality of batteries 30 arranged along the first direction X, that is, realizing multi-pack mounting, thereby fully utilizing the space in the length direction of the vehicle 1000 to increase the quantity of batteries 30 and increase the driving range of the vehicle 1000 per battery swap.

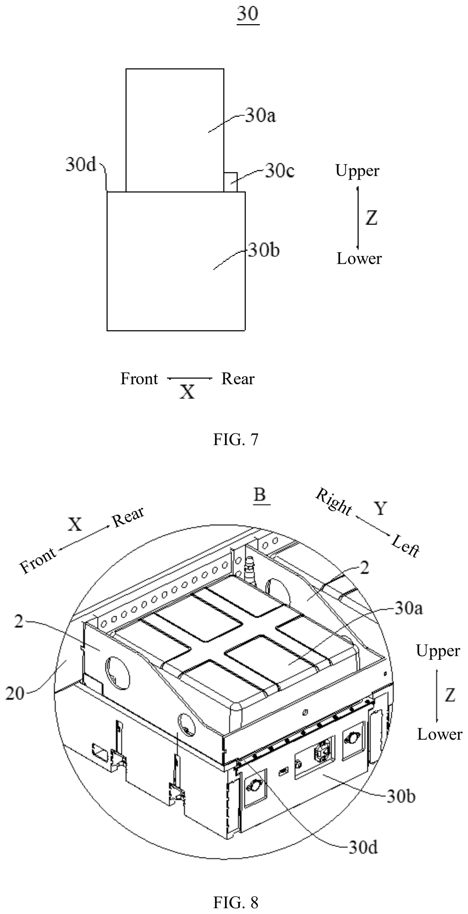

In some embodiments, as shown in FIGs. 7 and 8, the battery 30 includes a battery upper portion 30a and a battery lower portion 30b, the battery upper portion 30a is accommodated in the battery mounting space 4, the battery 30 is provided with an installation structure 30c at a position between the battery upper portion 30a and the battery lower portion 30b, and the installation structure 30c is detachably connected to the battery mounting structure 3.

Thus, when mounting the battery 30 on the battery installation frame 10, the battery upper portion 30a can extend into the battery mounting space 4, allowing the extension portion 2 to provide a certain degree of protection to the battery upper portion 30a, helping to reduce the risk of battery 30 damage, and prolonging the service life of the battery 30. Additionally, the height of the extension portion 2 can be less than the height of the battery 30, which can reduce the height of the extension portion 2, thereby reducing the height of the extension portion 2, thereby lowering the weight and cost of the battery installation frame 10. Moreover, providing the installation structure 30c at the position between the battery upper portion 30a and the battery lower portion 30b makes it possible for the battery mounting structure 3 to be located at the lower edge of the extension portion 2, facilitating battery swapping operations as described above. Furthermore, the detachable connection between the installation structure 30c and the battery mounting structure 3 helps to reduce the difficulty of battery 30 replacement, improving swapping efficiency.

The connection method between the installation structure 30c and the battery mounting structure 3 includes, but is not limited to, bolt connection, snap-fit, plug-in, or magnetic attachment.

In some embodiments, referring to FIGs. 7 and 8, in the first direction X, a dimension of the battery upper portion 30a is smaller than a dimension of the battery lower portion 30b to form a stepped surface 30d between the battery upper portion 30a and the battery lower portion 30b, the bottom of the battery mounting space 4 is open to allow the battery upper portion 30a to be inserted upward into the battery mounting space 4 from below, and the stepped surface 30d abuts against the bottom of the extension portion 2, such that at least a portion of the battery upper portion 30a extends into the battery mounting space 4, and the battery lower portion 30b is located outside the battery mounting space 4.

It is worth noting that the stepped surface 30d abutting against the bottom of the extension portion 2 is understood broadly, meaning the stepped surface 30d may directly contact the extension portion 2 to achieve the abutment function or indirectly contact it. For example, a battery mounting structure 3 can be provided at the lower position of the extension portion 2, and an installation structure 30c can be provided on the stepped surface 30d, such that when the installation structure 30c is cooperatively connected to the battery mounting structure 3, the stepped surface 30d abuts against the bottom of the extension portion 2.

Thus, during actual installation of the battery 30, when the battery upper portion 30a is inserted upward into the battery mounting space 4 from below, the abutment between the bottom of the extension portion 2 and the stepped surface 30d can serve as an indication that the battery 30 is properly assembled. This prevents the problem of the battery 30 being overly inserted into the battery mounting space 4, which could cause it to squeeze and hit the vehicle underbody, thereby protecting the battery 30. Additionally, configuring the dimension of the battery lower portion 30b to be larger than that of the battery upper portion 30a can further increase the battery 30 dimension to some extent, thereby further increasing the volumetric energy density of the battery 30.

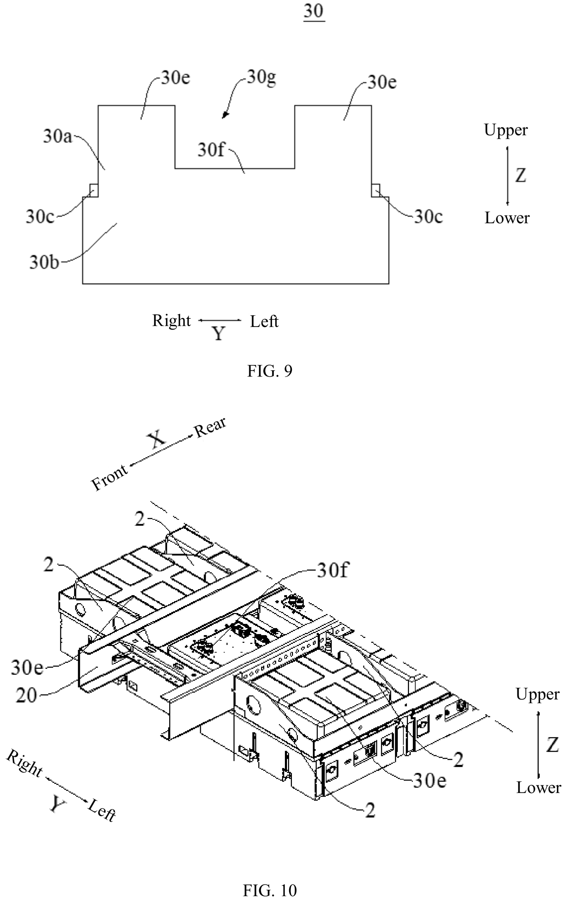

In some embodiments, referring to FIGs. 9 and 10, the battery 30 includes two battery side portions 30e and a battery central portion 30f, where in a width direction of the vehicle frame 60, the two battery side portions 30e are respectively located on two sides of the battery central portion 30f, a top surface of the battery central portion 30f is lower than a top surface of the battery side portions 30e, to form an avoidance groove 30g, between the two battery side portions 30e and the battery central portion 30e, that runs through along a length direction of the vehicle frame 60 and has an open top for avoiding the vehicle beam 20, and at least one of the battery side portions 30e and the battery central portion 30f is detachably connected to the battery mounting structure 3.

"At least one of the battery side portions 30e and the battery central portion 30f is detachably connected to the battery mounting structure 3" includes: the battery side portion 30e being detachably connected to the battery mounting structure 3, the battery central portion 30f being detachably connected to the battery mounting structure 3, or both the battery side portion 30e and the battery central portion 30f being respectively detachably connected to corresponding battery mounting structures 3.

The detachable connection between the battery side portion 30e and the battery mounting structure 3 may be achieved through an installation structure 30c on the battery side portion 30e, and the position of the installation structure 30c on the battery side portion 30e is not limited, for example, it may be located at the middle, upper, or lower part of the battery side portion 30e.

The detachable connection between the battery central portion 30f and the battery mounting structure 3 may be achieved through an installation structure 30c on the battery central portion 30f, and the position of the installation structure 30c on the battery central portion 30f is not limited, for example, it may be located at the middle, upper, or lower part of the battery central portion 30f.

The connection method between the battery side portion 30e and/or the battery central portion 30f and the battery mounting structure 3 through the installation structure 30c includes, but is not limited to, bolt connection, snap-fit, plug-in, or magnetic attachment.

Thus, the battery 30 structure is ingeniously designed to avoid the vehicle beam 20, such that the space on the two sides of the vehicle beam 20 in the width direction of the vehicle beam 20 are fully utilized, which allows the overall dimension of the battery 30 to be increased, and thereby increasing the volumetric energy density of the battery. Moreover, at least one of the battery side portions 30e and the battery central portion 30f is detachably connected to the battery mounting structure 3, which helps to improve the design flexibility of the battery 30. When the two battery side portions 30e are both connected to the battery mounting structure 3, or both the battery side portion 30e and the battery central portion 30f are connected to the battery mounting structure 3, the installation stability of the battery 30 can be enhanced.

For example, as shown in FIG. 10, at least a portion of the vehicle beam 20 is located in the avoidance groove 30g and above the battery central portion 30f, with the two battery side portions 30e respectively located on two sides of the vehicle beam 20 in the width direction of the vehicle beam 20. This can fully utilize the space on two sides of the vehicle beam 20 in the width direction of the vehicle beam 20 to arrange larger dimensional batteries 30.

It is worth noting that the form of the battery 30 in the embodiments of this application is not limited thereto. For example, it may include only one battery side portion 30e, or include both the battery central portion 30f and one battery side portion 30e.

In recent years, in application scenarios such as logistics, docks, and mines, battery swapping has become an important method for replenishing energy for pure electric commercial vehicles, and the construction of battery swapping stations has been accelerating. To ensure universal interchangeability in battery swapping, the battery swapping facilities such as swapping stations and charging equipment can be fully utilized to reduce resource waste.

This application proposes some embodiments related to battery swapping under frame to improve compatibility and interchangeability. However, the following embodiments are not limited to battery electric vehicles, and other types of swapping vehicles may also reference these embodiments.

In some embodiments, the operating voltage range of the swappable battery system is 400 V to 750 V.

In some embodiments, the flatness of the swapping contact surface of the swappable battery system is ≤4 mm. Specifically, the contact interface between the swappable battery system and the battery installation frame should be a plane without protruding structures, with a flatness of less than 4 mm.

In some embodiments, the dimensional tolerance of the swappable battery system is within ±10 mm.

In some embodiments, in the swappable battery system, the vehicle weight M1 and the battery capacity Q satisfy: 0 kg < M1 ≤ 1400 kg, 100 kWh ≤ Q ≤ 200 kWh; or 1400 kg < M1 ≤ 2800 kg, 200 kWh < Q ≤ 400 kWh; or 2800 kg < M1 ≤ 4200 kg, 400 kWh < Q ≤ 600 kWh; or 4200 kg < M1 ≤ 5600 kg, 600 kWh < Q ≤ 800 kWh.

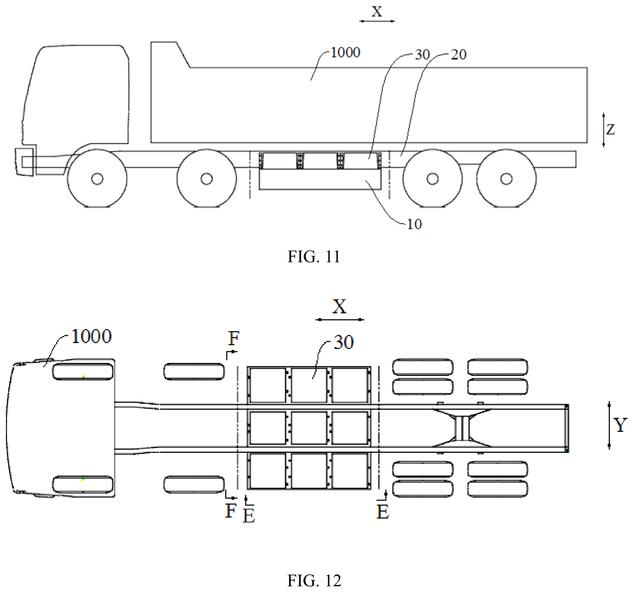

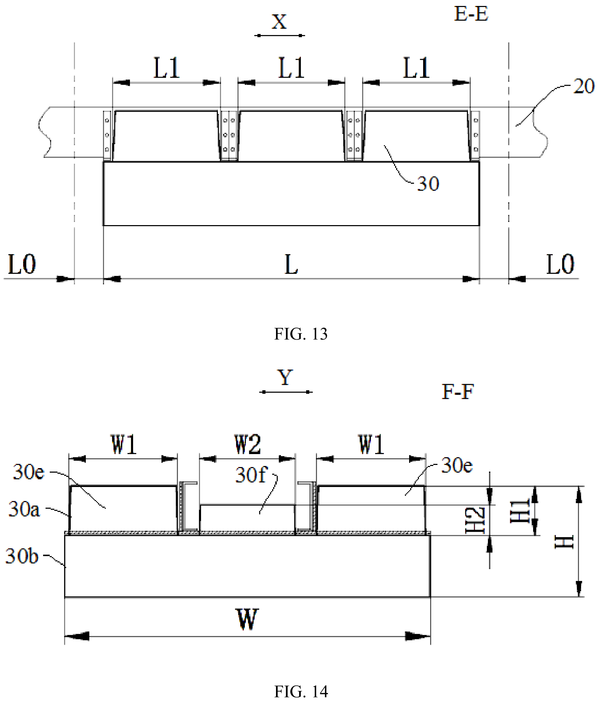

In some embodiments, as shown in FIGs. 11 and 12, the swappable battery system should be replaced on a vehicle within the corresponding envelope space, with the battery dimensions in the swappable battery system as indicated in FIGs. 13 and 14.

In some embodiments, referring to FIGs. 11 to 14, the front and rear end faces of the swappable battery system maintain a safety clearance L0 with the vehicle, where L0 ≥ 50 mm.

In some embodiments, referring to FIGs. 11 to 14, the dimension L of the swappable battery system along the length direction of the vehicle satisfies: 700 mm ≤ L ≤ 900 mm; or 1500 mm ≤ L ≤ 1700 mm; or 2300 mm ≤ L ≤ 2500 mm; or 3100 mm ≤ L ≤ 3300 mm.

In some embodiments, referring to FIGs. 11 to 14, the dimension W of the swappable battery system along the width direction of the vehicle satisfies: 2300 mm ≤ W ≤ 2550 mm.

In some embodiments, referring to FIGs. 11 to 14, the total height H of the swappable battery system satisfies: H ≤ 680 mm.

In some embodiments, referring to FIGs. 11 to 14, the length dimension L1 of the upper platform (for example, the battery upper portion 30a) of the swappable battery system satisfies: 600 mm ≤ L1 ≤ 700 mm.

In some embodiments, referring to FIGs. 11 to 14, the width dimension W1 of the upper side platforms (for example, the upper part of the battery side portion 30e) of the swappable battery system satisfies: W1 ≤ 805 mm.

In some embodiments, referring to FIGs. 11 to 14, the width dimension W2 of the upper middle platform (for example, the upper part of the battery central portion 30f) of the swappable battery system satisfies: W2 ≤ 640 mm.

In some embodiments, referring to FIGs. 11 to 14, the height dimension H1 of the upper side platforms (for example, the upper part of the battery side portion 30e) of the swappable battery system satisfies: H1 ≤ 300 mm.

In some embodiments, referring to FIGs. 11 to 14, the height dimension H2 of the upper middle platform (for example, the upper part of the battery central portion 30f) of the swappable battery system satisfies: H2 ≤ 150 mm.

The application scenarios for heavy-duty electric trucks currently include long-haul logistics, short- to medium-distance operations (for example, urban waste transport), and enclosed operation scenarios (for example, ports). The corresponding energy demands can be roughly divided into three categories: 400 kWh-600 kWh, 300 kWh-400 kWh, and 150 kWh-200 kWh. Based on this energy series, it can be seen that adopting a standard pack solution allows flexible configuration for different scenarios. For example, a standard swappable battery system with a capacity of approximately 150 kWh-200 kWh can use three standard swappable battery systems (referred to as triple-pack), two standard swappable battery systems (referred to as dual-pack), or a single standard swappable battery system (referred to as single-pack) to meet energy demands.

The main models of heavy-duty electric trucks currently include: 6*4 tractors, 4*2 tractors, 8*4 dump trucks, 6*4 dump trucks, 4*2 cargo trucks, and 6*4 cargo trucks, among which the 6*4 tractors and 8*4 dump trucks have relatively short wheelbases, while other models are compatible. For the 6*4 tractors, the traditional fuel vehicle wheelbase is 3300 mm, which is an ideal wheelbase but currently cannot accommodate large energy capacities. For rear-mounted swapping models, the wheelbase has been extended to 3800 mm, but this space still cannot accommodate the target energy capacity. Currently, efforts are being made to extend the wheelbase to 4200 mm, based on which the battery space is allocated. For the 8*4 dump truck, there are versions for urban use and mining areas. Mining 8*4 dump trucks have a longer wheelbase to ensure transport capacity. With the wheelbase being increased, this space can accommodate the target energy capacity. Urban 8*4 dump trucks with traditional fuel vehicle wheelbases of 2500 mm-2600 mm cannot accommodate the target energy capacity, and for rear-mounted swapping models, the wheelbase has been extended to 3200 mm-3300 mm, with battery swapping under frame based on this extended wheelbase for battery space allocation.

The space constraints at the front end of the battery include the leaf spring and its bracket, with the industry typically at 1600 mm-1800 mm (900 mm per side) under heavy load conditions. The space constraints at the rear end of the battery include the mudguard, approximately 700 mm from the wheel center. With a 50 mm safety clearance at both the front and rear ends of the battery, the envelope dimension for the swappable battery system for a 6*4 tractor is approximately 4200-900-700-100=2500 mm (triple-pack), and for an 8*4 dump truck, it is approximately 3300-900-700-100=1600 mm (dual-pack). Based on the envelope space of these two swappable battery systems, considering a 20 mm-30 mm gap between swappable battery systems, the length envelope dimension for each swappable battery system is approximately 700 mm-820 mm.

The width envelope dimension of the swappable battery system is designed to not exceed the legally required vehicle width, for example, 2550 mm for heavy-duty electric trucks.

The height envelope dimension of the swappable battery system is designed with a 20 mm gap between the upper end of the swappable battery system and the upper flange of the vehicle beam, and the bottom surface of the swappable battery system maintains a ground clearance of 300 mm or 400 mm or more. The upper flange of the vehicle beam typically has a ground clearance of 1000 mm-1100 mm, so the height envelope dimension for the swappable battery system is approximately 580 mm-780 mm.

Furthermore, to improve compatibility and interchangeability in battery swapping, this application further proposes some embodiments related to the battery installation frame 10.

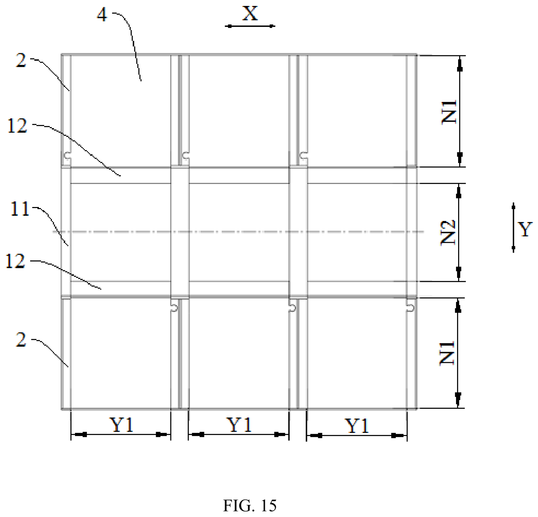

In some embodiments, referring to FIG. 15, in the length direction of the vehicle (for example, first direction X), the length of the battery mounting space 4 is Y1 and satisfies: 620 mm ≤ Y1 ≤ 720 mm.

In some embodiments, referring to FIG. 15, in the width direction of the vehicle (for example, second direction Y), the width of the battery mounting space 4 is N1 and satisfies: 690 mm ≤ N1 ≤ 815 mm.

In some embodiments, referring to FIG. 15, in the width direction of the vehicle (for example, second direction Y), the minimum width between the two second main walls 12 (for example, the battery avoidance opening 14) is N2 and satisfies: 660 mm ≤ N2 ≤ 680 mm.

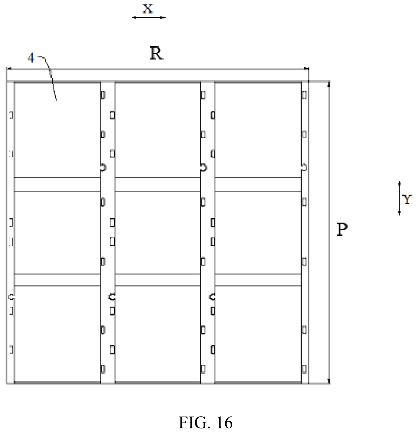

In some embodiments, referring to FIG. 16, in the width direction of the vehicle (for example, second direction Y), the total width of the battery installation frame 10 is P, and in the length direction of the vehicle (for example, first direction X), the total length of the battery installation frame 10 is R, and satisfies: 2300 mm ≤ P ≤ 2550 mm, 700 mm ≤ R ≤ 900 mm (for example, having only one battery mounting space 4), or 1500 mm ≤ R ≤ 1700 mm (for example, having two battery mounting spaces 4), or 2300 mm ≤ R ≤ 2500 mm (for example, having three battery mounting spaces 4), or 3100 mm ≤ R ≤ 3300 mm (for example, having four battery mounting spaces 4).

The above embodiments are only used to illustrate the technical solutions of this application and are not intended to limit them. Although this application has been described in detail with reference to the foregoing embodiments, those skilled in the art should understand that modifications can still be made to the technical solutions described in the foregoing embodiments, or equivalent replacements can be made to some or all of the technical features. Such modifications or replacements do not cause the essence of the corresponding technical solutions to depart from the scope of the technical solutions of the embodiments of this application, and they should be included within the scope of the claims and specification of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A battery installation frame, wherein the battery installation frame comprises a first frame, the first frame comprises a plurality of extension portions spaced apart along a first direction and the plurality of battery mounting spaces arranged sequentially along the first direction, the battery mounting space is defined between two adjacent extension portions along the first direction, and the battery installation frame is provided with a battery mounting structure configured to mount a battery in the battery mounting space.

2. The battery installation frame according to claim 1, wherein at least two of the battery mounting spaces on the first frame have consistent lengths in the first direction.

3. The battery installation frame according to claim 1 or 2, wherein at least two of the battery mounting spaces on the first frame have inconsistent lengths in the first direction.

4. The battery installation frame according to any one of claims 1 to 3, wherein the battery installation frame comprises two of the first frames spaced apart along a second direction, each of the first frames comprises a plurality of battery mounting spaces arranged sequentially along the first direction, and the second direction intersects the first direction.

5. The battery installation frame according to claim 4, wherein the extension portions of the two first frames are arranged in a one-to-one correspondence along the second direction, length extension directions of the two correspondingly arranged extension portions are the same, and orthographic projections of the two extension portions along the length extension direction overlap.

6. The battery installation frame according to claim 5, wherein the first direction is perpendicular to the second direction, the length extension direction of the extension portions is the second direction, and the battery mounting spaces on the two first frames are symmetrically arranged.

7. The battery installation frame according to any one of claims 4 to 6, wherein the battery installation frame further comprises a second frame, the second frame connects the two first frames spaced apart along the second direction, the second frame comprises a beam avoidance groove, and the beam avoidance groove has an opening running through along the first direction.

8. The battery installation frame according to claim 7, wherein the second frame comprises a plurality of first main walls, the plurality of first main walls are spaced apart along the first direction to form a battery avoidance opening between two adjacent first main walls, and the battery avoidance opening is arranged opposite the battery mounting space along the second direction.

9. The battery installation frame according to claim 8, wherein the second frame further comprises two second main walls, the second main walls extend along the first direction, the two second main walls are spaced apart and connected along the second direction on two sides of each of the first main walls, such that the beam avoidance groove is defined between the first main wall and the two second main walls, the first frame is arranged on a side of the second main wall away from the first main wall in the second direction, and each of the extension portions is connected to the second main wall.

10. The battery installation frame according to claim 9, wherein a height of the extension portion slopes downward in a direction away from the second main wall.

11. The battery installation frame according to claim 10, wherein a lower edge of the extension portion extends along a horizontal line, the battery mounting structure is located at the lower edge of the extension portion, and an upper edge of the extension portion slopes downward in a direction away from the second main wall.

12. The battery installation frame according to any one of claims 7 to 11, wherein at least one of the first frame and the second frame is provided with a beam connection structure.

13. The battery installation frame according to any one of claims 1 to 12, wherein at least one of a heat insulation structural member, a heat dissipation structural member, or a buffer structural member is provided on a side of the extension portion facing the battery mounting space.

14. The battery installation frame according to any one of claims 1 to 13, wherein the battery mounting structure is provided on the extension portion.

15. The battery installation frame according to claim 14, wherein the battery mounting structure is arranged on a side of the extension portion facing the battery mounting space.

16. The battery installation frame according to claim 15, wherein at least one extension portion located in the middle among the plurality of extension portions is a shared extension portion, the shared extension portion has the battery mounting spaces on two sides in the first direction, and the battery mounting structures are respectively arranged on two sides of the shared extension portion facing the battery mounting spaces on two sides.

17. The battery installation frame according to claim 16, wherein the battery mounting structures on two sides of the shared extension portion in the first direction are offset in their orthographic projections on a projection plane perpendicular to the first direction.

18. The battery installation frame according to any one of claims 15 to 17, wherein the extension portion comprises a mounting edge protruding into the battery mounting space, and the battery mounting structure is located on the mounting edge.

19. The battery installation frame according to any one of claims 14 to 18, wherein the extension portions on two sides of the battery mounting space in the first direction are each provided with the battery mounting structure.

20. The battery installation frame according to claim 19, wherein the battery mounting structures on two sides of the battery mounting space in the first direction are offset in their orthographic projections on a projection plane perpendicular to the first direction.

21. The battery installation frame according to any one of claims 14 to 20, wherein a plurality of battery mounting structures are provided on a side of the extension portion facing the battery mounting space, at least two of the battery mounting structures are spaced apart along the length direction of the extension portion.

22. The battery installation frame according to any one of claims 1 to 21, wherein the extension portion is plate-shaped, with a thickness direction as the first direction, a length direction as a second direction, and a width direction as a height direction.

23. The battery installation frame according to any one of claims 1 to 22, wherein the extension portion is provided with reinforcing ribs and/or a weight-reducing structure.

24. The battery installation frame according to any one of claims 1 to 23, wherein the first frame further comprises a reinforcing portion, the reinforcing portion connecting at least two of the extension portions.

25. A frame assembly, comprising a vehicle frame and the battery installation frame according to any one of claims 1 to 24, wherein the battery installation frame is configured to install a battery to the vehicle frame, and the first direction is a length direction of the vehicle frame.

26. The frame assembly according to claim 25, wherein the battery installation frame is arranged at the bottom of the vehicle frame, the vehicle frame comprises a vehicle beam, the first frame is provided on at least one side of the vehicle beam in a width direction of the vehicle beam, and at least a portion of the first frame is higher than a bottom surface of the vehicle beam of the vehicle frame in a height direction of the vehicle frame.

27. The frame assembly according to claim 26, wherein the first frames are symmetrically arranged on two sides of the vehicle beam in the width direction of the vehicle beam.

28. A vehicle, comprising a battery and the frame assembly according to any one of claims 25 to 27, wherein at least a portion of the battery is accommodated in the battery mounting space.

29. The vehicle according to claim 28, wherein the battery is detachably installed in any one of the battery mounting spaces.

30. The vehicle according to claim 28 or 29, wherein the vehicle comprises a plurality of the batteries arranged along the first direction, and the plurality of batteries are respectively installed in a one-to-one correspondence in the plurality of battery mounting spaces.

31. The vehicle according to any one of claims 28 to 30, wherein the battery comprises a battery upper portion and a battery lower portion, the battery upper portion is accommodated in the battery mounting space, the battery is provided with an installation structure at a position between the battery upper portion and the battery lower portion, and the installation structure is detachably connected to the battery mounting structure.

32. The vehicle according to claim 31, wherein in the first direction, a dimension of the battery upper portion is smaller than a dimension of the battery lower portion to form a stepped surface between the battery upper portion and the battery lower portion, the bottom of the battery mounting space is open, and the stepped surface abuts against the bottom of the extension portion.

33. The vehicle according to any one of claims 28 to 32, wherein the battery comprises two battery side portions and a battery central portion, wherein in a width direction of the vehicle frame, the two battery side portions are respectively located on two sides of the battery central portion, a top surface of the battery central portion is lower than a top surface of the battery side portions, to form an avoidance groove, between the two battery side portions and the battery central portion, that runs through along a length direction of the vehicle frame and has an open top for avoiding the vehicle beam, and at least one of the battery side portions and the battery central portion is detachably connected to the battery mounting structure.
